# EUROPÄISCHE PATENTANMELDUNG

(11) **EP 4 574 863 A1**
(43) Veröffentlichungstag der Anmeldung: **25.06.2025**
(21) Anmeldenummer: 23217964.8
(22) Anmeldetag: 19.12.2023
(51) Int. Cl.: C08G 18/02, C08G 18/09, C08G 18/22, C08G 18/24, C08G 18/28, C08G 18/36, C08G 18/38, C08G 18/40, C08G 18/48, C08G 18/54, C08G 18/65, C08G 18/66, C08G 18/72, C08G 18/78, C08G 18/79, C09D 175/02, C09D 175/04, C08G 18/80

(54) **POLYISOCYANATGEMISCH**

(71) Anmelder: Covestro Deutschland AG, 51373 Leverkusen (DE)
(72) Erfinder: LAAS, Hans-Josef, 51519 Odenthal (DE); DURGUT, Erkan, 44867 Bochum (DE)
(74) Vertreter: Levpat

(57) **Zusammenfassung**

Die Erfindung betrifft ein Polyisocyanatgemisch, ein Verfahren zu dessen Herstellung, sowie die Verwendung des Polyisocyanatgemisches. Weitere Gegenstände der Erfindung sind eine, das Polyisocyanatgemisch enthaltende Zusammensetzung, ein Verfahren zur Herstellung einer Beschichtung auf einem Substrat sowie das beschichtete Substrat.

## Beschreibung

Die Erfindung betrifft ein Polyisocyanatgemisch, ein Verfahren zu dessen Herstellung, sowie die Verwendung des Polyisocyanatgemisches. Weitere Gegenstände der Erfindung sind eine das Polyisocyanatgemisch enthaltende Zusammensetzung, ein Verfahren zur Herstellung einer Beschichtung auf einem Substrat sowie das beschichtete Substrat.

Lösemittelfreie Zweikomponenten (2K) Polyurethan-, Polyharnstoff- und Polythiourethan-Beschichtungsmittel lassen sich im Gegensatz zu lösemittelhaltigen Lacken in nahezu beliebig hohen Auftragsstärken verarbeiten. Sie finden heute im Wesentlichen im Baubereich zur Herstellung dickschichtiger Überzüge, beispielsweise zur Beschichtung mechanisch oder chemisch stark beanspruchter Flächen, wie z. B. Industriefußböden, Verkehrsflächen, Parkdecks, zur Balkonabdichtung aber auch im Korrosionsschutz Verwendung.

Für Außenanwendungen sind dabei hochelastische rissüberbrückende Beschichtungen, die eine hohe Stabilität gegenüber Wetterbeanspruchung, insbesondere gegenüber UV-Strahlung aufweisen, von besonderem Interesse.

Lösemittelfreie 2K-Beschichtungen erfordern zwingend flüssige, niedrigviskose Reaktionspartner. Während eine Reihe geeigneter Polyole, Polyamine und Polythiole mit ausreichend niedriger Viskosität, beispielsweise Polyetherpolyole, leicht verzweigte Polyesterpolyole, Polyetheramine oder Polyasparaginsäureester zur Verfügung stehen, kommen als Vernetzerkomponenten zur Herstellung elastischer Beschichtungen vorzugsweise oligomere Polyisocyanate auf Basis linearaliphatischer Diisocyanate, insbesondere Polyisocyanate des Hexamethylendiisocyanats (1,6-Diisocyanatohexan, HDI), zum Einsatz.

HDI-Polyisocyanate, wie die als Lackpolyisocyanate bekannten Derivate des HDI mit Uretdion-, Isocyanurat-, Allophanat-, Biuret-, Iminooxadiazindion- und/oder Oxadiazintrionstruktur zeichnen sich auch in lösemittelfreier Form durch niedrige Viskositäten aus und liefern bekanntermaßen hoch wetterbeständige, flexible Lackfilme.

Trotz des bereits erreichten hohen Qualitätsniveaus der 2K-Polyurethan- bzw. Polyharnstoff-Lacke besteht im Markt ein beständiges Interesse an Beschichtungssystemen mit immer weiter verbesserten Eigenschaften, insbesondere einer verbesserten Elastizität, die beispielsweise die Formulierung von Fußbodenbeschichtungen mit hohem Gehkomfort ermöglichen.

Der Trend zu nachhaltigeren Produkten führte in den letzten Jahren auch im Bereich der Polyurethane zu einer steigenden Nachfrage nach biobasierten Rohstoffen. Dies war Anlass zur Entwicklung von Polyisocyanatvernetzern auf Basis des aus Biomasse zugänglichen 1,5-Diisocyanatopentan (im Folgenden auch Pentamethylendiisocyanat oder PDI genannt) (siehe z. B. EP-A 3 271 432 und WO 2016/169810). Unter Verwendung von biobasierten PDI-Polyisocyanaten hergestellte PUR-Lacke und -Klebstoffe zeigen ein ähnliches Eigenschaftsniveau wie solche, die mit vergleichbaren HDI-Polyisocyanaten auf petrochemischer Basis vernetzt wurden, und sind diesen in einigen Anwendungsbereichen sogar überlegen.

Ein gravierender Nachteil von PDI-Polyisocyanaten ist allerdings die Tatsache, dass sie im Vergleich zu entsprechenden HDI-Derivaten bei vergleichbarer Oligomerenverteilung höhere Viskositäten aufweisen (M. Widemann et al., ACS Sustainable Chem. Eng. 2018, 6, 9753-9759; DOI: http://dx.doi.org/10.1021/acssuschemeng.8b00758) und zu ihrer Verarbeitung in der Regel größere Mengen organischer Lösemittel benötigt werden. Gerade aber zur Herstellung nachhaltiger dickschichtiger Überzüge sind aber Lacksysteme mit möglichst geringem Anteil an flüchtigen organischen Bestandteilen, vorzugsweise lösemittelfreie Lacksysteme gewünscht.

Insbesondere für Anwendungen im Baubereich, beispielsweise zur Fußboden-Beschichtung oder zur Balkonabdichtung, bestand daher ein Bedarf an nachhaltigen Polyisocyanatgemischen, die ausreichend niedrige Viskositäten aufweisen, um sie in lösemittelarmer oder -freier Form verarbeiten zu können.

Die Aufgabe der vorliegenden Erfindung bestand somit darin, nachhaltige Polyisocyanatgemische bereitzustellen, die ausreichend niedrige Viskositäten aufweisen, um sie in lösemittelarmer, vorzugsweise in lösemittelfreier Form verarbeiten zu können, und die zu Beschichtungen mit einer verbesserten Elastizität führen.

Diesem Bedarf Rechnung tragend ist ein Gegenstand der vorliegenden Erfindung ein Polyisocyanatgemisch, enthaltend mindestens ein Polyisocyanat M) der allgemeinen Formel (I) 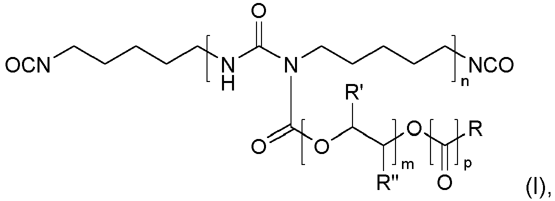 in welcher
- R: für einen linearen oder verzweigten, gesättigten oder ungesättigten aliphatischen und/oder gesättigten oder ungesättigten cycloaliphatischen Rest mit (6 bis 22)-p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R` und R" für Wasserstoff steht,
- n: für eine ganze Zahl von 1 bis 12,
- m: für eine ganze Zahl von 1 bis 10 und
- p: für 0 oder 1 steht

und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Polyisocyanate in einem Gewichtsverhältnis von M) zu N) von 40 : 60 bis 90 : 10 vorliegen.

Gegenstand der Erfindung ist auch ein Verfahren zur Herstellung der erfindungsgemäßen Polyisocyanatgemische, dadurch gekennzeichnet, dass mindestens ein Polyisocyanat M) der allgemeinen Formel (I) 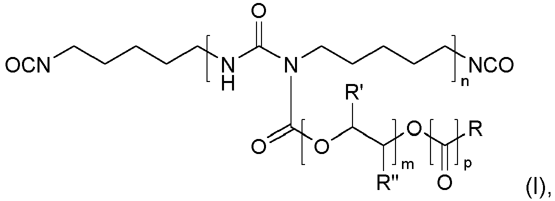 in welcher
- R: für einen linearen oder verzweigten, gesättigten oder ungesättigten aliphatischen und/oder gesättigten oder ungesättigten cycloaliphatischen Rest mit (6 bis 22)-p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R` und R" für Wasserstoff steht,
- n: für eine ganze Zahl von 1 bis 12,
- m: für eine ganze Zahl von 1 bis 10 und
- p: für 0 oder 1 steht
mit mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen, vermischt wird, so dass die Polyisocyanate M) und N) in einem Gewichtsverhältnis zueinander von 40 : 60 bis 90 : 10, bevorzugt von 40 : 60 bis 85 : 15 und besonders bevorzugt von 50 : 50 bis 80 : 20, vorliegen.

Erfindungsgemäß bedeuten die Ausdrücke "umfassend" und "enthaltend" bevorzugt "im Wesentlichen bestehend aus" und besonders bevorzugt "bestehend aus". Die in den Patentansprüchen und in der Beschreibung genannten weiteren Ausführungsformen können beliebig kombiniert werden, sofern sich aus dem Kontext nicht eindeutig das Gegenteil ergibt. "Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein Polyisocyanat" bedeutet daher beispielsweise, dass nur eine Art von Polyisocyanat oder mehrere verschiedene Arten von Polyisocyanaten, ohne Angaben über die Menge der einzelnen Verbindungen zu machen, enthalten sein können. Zahlenwerte, die hierin ohne Dezimalstellen angegeben sind, beziehen sich jeweils auf den vollen angegebenen Wert mit einer Dezimalstelle. So steht beispielsweise "99 %" für "99,0 %". Numerische Bereiche, die in dem Format "in/von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

Vorliegend ist der Begriff "aliphatisch" definiert als nicht-aromatische Kohlenwasserstoffgruppen, die gesättigt oder ungesättigt sind.

Vorliegend ist der Begriff "araliphatisch" definiert als aliphatische Kohlenwasserstoffreste, die gesättigt oder ungesättigt sind und mindestens einen aromatischen Substituenten aufweisen. Vorliegend ist der Begriff "alicyclisch" oder "cycloaliphatisch" definiert als gegebenenfalls substituierte, carbocyclische oder heterocyclische Verbindungen oder Einheiten, die nicht aromatisch sind (wie z.B. Cycloalkane, Cycloalkene oder Oxa-, Thia-, Aza- oder Thiazacycloalkane). Besondere Beispiele sind Cyclohexylgruppen, Cyclopentylgruppen und ihre N- oder O-heterocyclischen Derivate wie z.B. Pyrimidin, Pyrazin, Tetrahydropyran oder Tetrahydrofuran.

Für den Fall, dass die Gruppen oder Verbindungen als "gegebenenfalls substituiert" oder "substituiert" offenbart werden, sind geeignete Substituenten -F, -Cl, -Br, -I, -OH, -OCH₃, OCH₂CH₃, -O-Isopropyl oder-O-n-Propyl, -OCF₃, -CF₃, -S-C₁₋₆-Alkyl und/oder (gegebenenfalls über ein angehängtes Heteroatom) eine lineare oder verzweigte, aliphatische und/oder alicyclische Struktureinheit mit 1 bis 12 Kohlenstoffatomen, die jeweils als Ersatz für ein kohlenstoffgebundenes Wasserstoffatom des betreffenden Moleküls fungiert. Bevorzugte Substituenten sind Halogen (insbesondere -F, -Cl), C₁₋₆-Alkoxy (insbesondere Methoxy und Ethoxy), Hydroxy, Trifluormethyl und Trifluormethoxy, die jeweils als Ersatz für ein an Kohlenstoff gebundenes Wasserstoffatom des betreffenden Moleküls fungieren.

Synonym für die Vielzahl unterschiedlicher Polymere mit beispielsweise Urethan-, Harnstoff- und/oder Thiourethanstrukturen, die sich aus Polyisocyanaten und H-aciden Verbindungen, wie z. B. Polyolen, Polyaminen und/oder Polythiolen, herstellen lassen, wird im Folgenden auch der allgemeine Begriff "Polyurethane" verwendet.

Das erfindungsgemäße Polyisocyanatgemisch stellt eine physikalische Abmischung dar und unterscheidet sich somit von einem rein chemisch auf direktem Weg hergestellten Polyisocyanat beispielsweise hinsichtlich der mittels Gelpermeationschromatographie gemäß DIN EN ISO 13885-1:2021-11 bestimmbaren Oligomerenverteilung.

In einer ersten bevorzugten Ausführungsform des erfindungsgemäßen Polyisocyanatgemisches liegen die Polyisocyanate M) und N) in einem Gewichtsverhältnis zueinander von 40 : 60 bis 85 : 15, vorzugsweise 50 : 50 bis 80 : 20 vor.

In einer weiteren bevorzugten Ausführungsform weist das erfindungsgemäße Polyisocyanatgemisch, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 6,8 bis 19,6 Gew.-%, vorzugsweise 6,8 bis 19,2 Gew.-%, besonders bevorzugt 7,0 bis 18,8 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, auf.

In einer weiteren bevorzugten Ausführungsform weist das erfindungsgemäße Polyisocyanatgemisch eine nach DIN EN ISO 3219:1994-10 bei einer Scherrate von 250 s⁻¹ gemessene Viskosität bei 23°C von weniger als 3000 mPas, bevorzugt weniger als 2000 mPas und besonders bevorzugt weniger als 1500 mPas auf.

Das mindestens eine Polyisocyanat M) wird mit dem mindestens einen Polyisocyanat N) so gemischt, dass das erfindungsgemäße Polyisocyanatgemisch erhalten wird und die Polyisocyanate M) und N) im oben genannten Gewichtsverhältnis zueinander vorliegen. Dabei können durch geeignete Wahl der Mischungsverhältnisse in den genannten Grenzen Eigenschaften, wie z. B Viskosität, NCO-Gehalt und -Funktionalität, der erfindungsgemäßen Verfahrensprodukte gezielt eingestellt werden. Das Vermischen erfolgt nach beliebigen Methoden und in beliebiger Reihenfolge, bei einer Temperatur von 0 bis 60°C, vorzugsweise 10 bis 50°C, besonders bevorzugt 20 bis 40°C, gegebenenfalls unter Inertgasatmosphäre, vorzugsweise unter Ausschluss von Feuchtigkeit.

Das erfindungsgemäße Verfahren wird bevorzugt lösemittelfrei durchgeführt. Gegebenenfalls können aber auch geeignete, gegenüber den reaktiven Gruppen der Ausgangspolyisocyanate M) und N) inerte Lösemittel mitverwendet werden. Hierfür geeignet sind sowohl unter Verwendung fossiler Rohstoffe oder auch aus nachwachsenden Rohstoffen hergestellte Lösemittel, insbesondere die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Ethyl(-)-L-Lactat, Aceton, 2-Butanon, 4-Methyl-2-pentanon, Cyclohexanon, Dihydrolevoglucosenon, Toluol, Xylol, Chlorbenzol, Testbenzin, höher substituierte Aromaten, wie sie beispielsweise unter den Bezeichnungen Solventnaphtha, Solvesso^{®}, Isopar^{®}, Nappar^{®}, Varsol^{®} (ExxonMobil Chemical Central Europe, Köln, DE) und Shellsol^{®} (Shell Deutschland Oil GmbH, Hamburg, DE) im Handel sind, aber auch Lösemittel wie Dimethylfuran, 2-Methyltetrahydrofuran, Dimethylisosorbid (DMI), γ-Valerolacton, Propylenglykoldiacetat, Diethylenglykoldimethylether, Dipropylenglykoldimethylether, Diethylenglykolethyl- und butyletheracetat, N-Methylpyrrolidon und N-Methylcaprolactam, oder beliebige Gemische solcher Lösemittel.

In einer bevorzugten Ausführungsform des erfindungsgemäßen Verfahrens werden 40 bis 90 Gewichtsteile, besonders bevorzugt 40 bis 85 Gewichtsteile, ganz besonders bevorzugt 50 bis 80 Gewichtsteile des Polyisocyanates M) und 10 bis 60 Gewichtsteile, bevorzugt 15 bis 60 Gewichtsteile, ganz besonders bevorzugt 20 bis 80 Gewichtsteile des Polyisocyanates N) vermischt. Bei Mitverwendung von einem oder mehreren Lösemitteln können diese entweder in dem mindestens einen Polyisocyanat M) und/oder in dem mindestens einen Polyisocyanat N), vorzugsweise in dem mindestens einen Polyisocyanat N) bereits vor Beginn des Vermischens enthalten sein. Sie können beim erfindungsgemäßen Verfahren gegebenenfalls aber auch nach Beendigung oder zu einem beliebigen Zeitpunkt während des eigentlichen Mischvorgangs zugegeben werden.

Falls überhaupt kommen Lösemittel beim erfindungsgemäßen Verfahren in einer Menge von bis zu 40 Gew.-%, vorzugsweise 30 Gew.-%, besonders bevorzugt 20 Gew.-%, bezogen auf die Summe aus Polyisocyanat M), Polyisocyanat N) und Lösemittel zum Einsatz.

Im Folgenden werden die Polyisocyanate M) und N) weiter beschrieben und bevorzugte Ausgestaltungen genannt.

### Polyisocyanat M)

Das Polyisocyanat M) ist ein spezielles PDI-Allophanatpolyisocyanat und wird beschrieben durch die allgemeine Formel (I). Bevorzugt ist eine allgemeine Formel (I) des mindestens einen Polyisocyanates M), 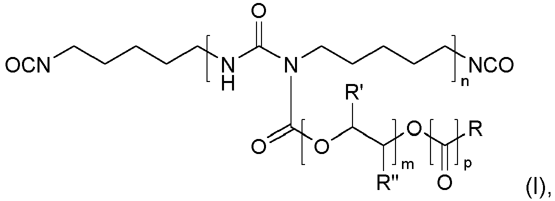 in welcher
- R: für einen linearen oder verzweigten, gesättigten oder ungesättigten aliphatischen und/oder gesättigten oder ungesättigten cycloaliphatischen Rest mit (8 bis 20) - p, besonders bevorzugt mit (10 bis 18) - p und ganz besonders bevorzugt mit (12 bis 14) - p Kohlenstoffatomen, der gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R` und R" für Wasserstoff steht,
- n: für eine ganze Zahl von 1 bis 12,
- m: für eine ganze Zahl von 1 bis 7, besonders bevorzugt für eine ganze Zahl von 2 bis 5 und ganz besonders bevorzugt für eine ganze Zahl von2 bis 4, und
- p: für 0 oder 1 steht.

Das zur Herstellung des Polyisocyanates M) eingesetzte 1,5-Diisocyanatopentan (vorliegend auch als Pentamethylendiisocyanat oder PDI bezeichnet) kann auf verschiedene Weise, beispielsweise durch Phosgenierung in der Flüssig- oder Gasphase oder auf phosgenfreien Weg, wie z. B. durch thermische Urethanspaltung, ausgehend von vorzugsweise biotechnologisch durch Decarboxylierung der natürlich vorkommenden Aminosäure Lysin erhaltenem 1,5-Diaminopentan hergestellt werden.

Eine weitere bevorzugte Ausführungsform betrifft ein Verfahren zur Herstellung des Polyisocyanates M), durch Umsetzung von 1,5-Diisocyanatopentan mit mindestens einem Alkohol B) der allgemeinen Formel (II) 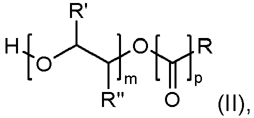 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindesten einer der Reste R' und R" für Wasserstoff steht,
- m: für eine ganze Zahl von 1 bis 10 und
- p: für 0 oder 1 steht.

Bevorzugt wird 1,5-Diisocyanatopentan mit mindestens einem Alkohol B) der allgemeinen Formel (II) umgesetzt, 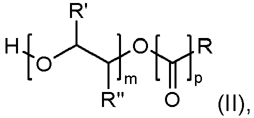 in welcher
- R: für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R' und R" für Wasserstoff steht,
- m: für eine ganze Zahl von 1 bis 10 und
- p: für 0 oder 1 steht.

Als alkoholische Komponente B) kommt bei der Herstellung des Polyisocyanates M) mindestens ein Alkohol der allgemeinen Formel (II), 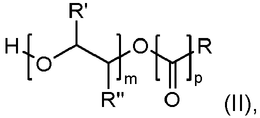 zum Einsatz, in welcher
- R: für einen linearen oder verzweigten, gesättigten oder ungesättigten aliphatischen und/oder gesättigten oder ungesättigten cycloaliphatischen Rest mit (6 bis 22) - p, vorzugsweise mit (8 bis 20) - p, besonders bevorzugt mit (10 bis 18) - p und ganz besonders bevorzugt mit (12 bis 14) - p Kohlenstoffatomen, der jeweils gegebenenfalls substituiert sein kann, steht,
- R' und R": unabhängig voneinander für Wasserstoff oder einen aliphatischen Rest mit 1 bis 10 Kohlenstoffatomen stehen, wobei mindestens einer der Reste R` und R" für Wasserstoff steht, und
- m: für eine ganze Zahl von 1 bis 10, vorzugsweise für eine ganze Zahl von 1 bis 7, besonders bevorzugt für eine ganze Zahl von 2 bis 5 und ganz besonders bevorzugt für eine ganze Zahl von 2 bis 4, und
- p: für 0 oder 1 steht.

Bei diesen Alkoholen handelt es sich beispielsweise um die an sich bekannten Alkoxylierungsprodukte von Fettalkoholen der allgemeinen Formel (III)

R¹-OH (III),

in welcher
- R¹: für einen linearen oder verzweigten, gesättigten oder ungesättigten aliphatischen und/oder gesättigten oder ungesättigten cycloaliphatischen Rest mit 6 bis 22, vorzugsweise 8 bis 20, besonders bevorzugt 10 bis 18, ganz besonders bevorzugt 12 bis 14 Kohlenstoffatomen, der jeweils gegebenenfalls substituiert sein kann, steht,
und/oder Fettsäuren der allgemeinen Formel (IV)

R²-COOH (IV),

in welcher
- R²: für einen linearen oder verzweigten, gesättigten oder ungesättigten aliphatischen und/oder gesättigten oder ungesättigten cycloaliphatischen Rest mit 5 bis 21, vorzugsweise 7 bis 19, besonders bevorzugt 9 bis 17, ganz besonders bevorzugt 11 bis 13 Kohlenstoffatomen, der jeweils gegebenenfalls substituiert sein kann, steht.

Bei vorgenannten Fettalkoholen der allgemeinen Formel (III) steht in der allgemeinen Formel (I) und der allgemeinen Formel (II) p für 0 und R¹ für R, inklusive der genannten Bevorzugungen für R¹. Ebenso sind als Reste R¹ und auch R beispielhaft geeignet, bevorzugt und besonders bevorzugt die von den nachstehend als beispielhaft geeignet, bevorzugt und besonders bevorzugt genannten Fettalkoholen abgeleiteten Reste genannt.

Bei vorgenannten Fettsäuren der allgemeinen Formel (IV) steht in der allgemeinen Formel (I) und der allgemeinen Formel (II) p für 1 und R² für R, inklusive der genannten Bevorzugungen für R². Ebenso sind als Reste R² und auch R beispielhaft geeignet, bevorzugt und besonders bevorzugt die von den nachstehend als beispielhaft geeignet, bevorzugt und besonders bevorzugt genannten Fettsäuren abgeleiteten Reste genannt.

Für die Alkoxylierung geeignete Fettalkohole sind beispielsweise 1-Hexanol (Capronalkohol), 1-Heptanol (Önanthalkohol), 1-Octanol (Caprylalkohol), 1-Nonylalkohol (Pelargonalkohol), 1-Decanol (Caprinalkohol), 1-Dodecanol (Laurylalkohol), 1-Tetradecanol (Myristylalkohol), 1-Hexadecanol (Cetylalkohol), 1-Heptadecanol (Margarylalkohol), 1-Octadecanol (Stearylalkohol), 1-Eicosanol (Arachidylalkohol), 1-Docosanol (Behenylalkohol), 1-Tetracosanol (Lignocerylalkohol), 1-Hexacosanol (Cerylalkohol), 1-Octacosanol (Montanylalkohol), 1-Triacontanol (Melissylalkohol), *cis*-9-Hexadecen-1-ol (Palmitoleylalkohol), *cis*-9-Octadecen-1-ol (Oleylalkohol), *trans*-9-Octadecen-1-ol (Elaidylalkohol), *cis*-11-Octadecen-1-ol, *cis,cis*-9,12-Octadecadien-1-ol (Linoleylalkohol) und 6,9,12-Octadecatrien-1-ol (γ-Linolenylalkohol), als geeignete Fettsäuren seien beispielsweise Hexansäure (Capronsäure), Heptansäure (Önanthsäure), Octansäure (Caprylsäure), Nonansäure (Pelargonsäure), Decansäure (Caprinsäure), Undecansäure, Dodecansäure (Laurinsäure), Tridecansäure, Tetradecansäure (Myristinsäure), Pentadecansäure, Hexadecansäure (Palmitinsäure), Heptadecansäure (Margarinsäure), Octadecansäure (Stearinsäure), Nonadecansäure, Eicosan-/Icosansäure (Arachinsäure), Heneicosansäure und Docosansäure (Behensäure), *cis*-9-Octadecensäure (Ölsäure) und *cis*-13-Docosensäure (Erucasäure) genannt.

Bevorzugt sind dabei solche Fettalkohole und Fettsäuren, die unter Verwendung pflanzlicher und tierischer Öle und Fette hergestellt wurden.

Besonders bevorzugte Fettalkohole zur Herstellung der alkoholischen Komponente B) sind 1-Decanol, 1-Dodecanol, 1-Tetradecanol und 1-Octadecanol, ganz besonders bevorzugt 1-Dodecanol und 1-Tetradecanol, besonders bevorzugte Fettsäuren sind Decansäure, Dodecansäure, Tetradecansäure und Hexadecansäure, ganz besonders bevorzugt Dodecansäure, Tetradecansäure. Zur Herstellung der alkoholischen Komponente B) durch Alkoxylierung der genannten Fettalkohole und/oder Fettsäuren sind beliebige Alkylenoxide mit 2 bis 12 Kohlenstoffatomen, wie z. B. Ethylenoxid, Propylenoxid, 1,2-Epoxybutan, 1,2-Epoxyhexan, 1,2-Epoxyoctan oder 1,2-Epoxydodecan, geeignet, die in beliebiger Reihenfolge oder auch im Gemisch bei der Alkoxylierungsreaktion eingesetzt werden können. Bevorzugte Alkylenoxide sind solche mit 2 bis 4 Kohlenstoffatomen. Besonders bevorzugte Alkylenoxide zur Herstellung der alkoholischen Komponente B) sind Ethylenoxid und Propylenoxid.

Aus den vorstehend beispielweise und bevorzugt genannten Alkylenoxiden ergibt sich die Anzahl der Kohlenstoffatome der Reste R` oder R" in der allgemeinen Formel (I). Somit stehen R' und R" in der allgemeinen Formel (I) und/oder Formel (II) unabhängig voneinander für Wasserstoff oder einen aliphatischen Rest mit bevorzugt 1 bis 2 Kohlenstoffatomen, wobei mindestens einer der Reste R` und R" für Wasserstoff steht.

Geeignete alkoholische Komponenten B) zur Herstellung der Polyisocyanate M) sind insbesondere Alkoxylierungsprodukte der genannten Fettsäuren und/oder Fettalkohole, die im statistischen Mittel 1 bis 10, vorzugsweise 1 bis 7, besonders bevorzugt 2 bis 5 und ganz besonders bevorzugt 2 bis 4 Alkylenoxideinheiten aufweisen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

In einer weiteren bevorzugten Ausführungsform kommen als alkoholische Komponente B) Alkoxylierungsprodukte zum Einsatz, die im statistischen Mittel 1 bis 10, vorzugsweise 1 bis 7, besonders bevorzugt 2 bis 5 und ganz besonders bevorzugt 2 bis 4 Alkylenoxideinheiten aufweisen, wobei die die Alkylenoxideinheiten vorzugsweise Ethylenoxid- und/oder Propylenoxideinheiten umfassen oder daraus bestehen. Die vorstehend als statistische Mittel genannten Zahlen und Zahlenbereiche ergeben die erfindungsgemäßen und bevorzugten ganzen Zahlen m in der allgemeinen Formel (I) und der allgemeinen Formel (II).

Die alkoholischen Komponenten B) weisen vorzugsweise einen pH-Wert, gemessen an einer 1 %igen Lösung der jeweiligen alkoholischen Komponente B) in Wasser, von 4,0 bis 8,0, vorzugsweise von 4,5 bis 7,5, besonders bevorzugt von 5,0 bis 7,0 und/oder Gesamtgehalte an Alkalikationen von maximal 100 ppm, vorzugsweise von 1 bis 70 ppm, besonders bevorzugt von 2 bis 50 ppm auf.

Gegebenenfalls kann die Komponente B) neben den genannten Alkoxylierungsprodukten von Fettalkoholen und/oder Fettsäuren in untergeordneter Menge weitere alkoholische Verbindungen enthalten.

Hierbei handelt es sich beispielsweise um Monoalkohole, wie z. B. Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole, Hydroxymethylcyclohexan, 3-Methyl-3-hydroxymethyloxetan, Benzylalkohol, Phenol, die isomeren Kresole, Octylphenole, Nonylphenole und Naphthole, Furfurylalkohol und Tetrahydrofurfurylalkohol, unverzweigte aliphatische Diole, wie z. B. 1,2-Ethandiol, 1,3-Propandiol, 1,4-Butandiol, 1,5-Pentandiol, 1,6-Hexandiol, 1,7-Heptandiol und 1,8-Octandiol, cycloaliphatische Diole, wie z. B. 1,2- und 1,4-Cyclohexandiol, 1,4-Cyclohexandimethanol, 4,4'-(1-Methylethyliden)-biscyclohexanol, Triole wie z. B. 1,2,3-Propantriol, 1,1,1-Trimethylolethan, 1,2,6-Hexantriol, 1,1,1-Trimethylolpropan, und 1,3,5-Tris(2-hydroxyethyl)isocyanurat, tetrafunktionelle Alkohole, wie z. B. 2,2-Bis(hydroxymethyl)-1,3-propandiol oder beliebige Gemische solcher Alkohole.

Falls überhaupt, kommen diese weiteren alkoholischen Verbindungen zur Herstellung des Polyisocyanates M) in Mengen von maximal 25 Gew.-%, vorzugsweis maximal 20 Gew.-%, besonders bevorzugt maximal 15 Gew.-%, bezogen auf die eingesetzte Menge an Alkoxylierungsprodukten von Fettalkoholen und/oder Fettsäuren zum Einsatz.

Zur Herstellung des Polyisocyanates M) wird 1,5-Diisocyanatopentan mit mindestens einer alkoholischen Komponente B) vorzugsweise bei Temperaturen von 40 bis 200 °C, besonders bevorzugt von 60 bis 180 °C, und/oder unter Einhaltung eines Äquivalent-Verhältnisses von Isocyanatgruppen zu gegenüber Isocyanaten reaktiven Gruppen von vorzugsweise 4:1 bis 50:1, besonders bevorzugt von 5:1 bis 30:1, ganz besonders bevorzugt von 10:1 bis 25:1, zu Allophanatpolyisocyanaten umgesetzt.

Das Verfahren zur Herstellung des Polyisocyanates M) kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 (Seite 2, Zeilen 73 bis 87) beschriebenen Art, um Alkylierungsmittel der in der US-A-3 769 318 (Spalte 6, Zeilen 5 bis 49) beschriebenen Art oder um starke Säuren, wie sie in der EP-A-0 000 194 (Seite 13, Zeile 27 bis Seite 14, Zeilen1 bis 18) beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylacetoacetat), Eisen-(III)-chlorid, Kaliumoctoat, Mangan-, Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren zur Herstellung des Polyisocyanates M) sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren zur Herstellung des Polyisocyanates M) sind Zink- und/oder Zirconiumverbindungen der obengenannten Art. Ganz besonders bevorzugt ist die Verwendung von mindestens Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen bei der Herstellung des Polyisocyanates M), falls überhaupt, vorzugsweise in einer Menge von 0,001 bis 5 Gew.-%, besonders bevorzugt 0,005 bis 1 Gew.-%, bezogen auf das Gesamtgewicht der Reaktionspartner A) und B) zum Einsatz und können sowohl vor Reaktionsbeginn als auch zu jedem Zeitpunkt der Reaktion zugesetzt werden.

Bevorzugt kommt Bleioctoat nicht als Katalysator bei der Herstellung der Polyisocyanate M) zum Einsatz und damit ist ein erfindungsgemäßes Polyisocyanatgemisch bevorzugt, welches frei von katalytischen Mengen, besonders bevorzugt frei von nachweisbaren Mengen von Bleioctoat ist.

Die Herstellung des Polyisocyanates M) erfolgt vorzugsweise lösemittelfrei. Gegebenenfalls können aber auch geeignete, gegenüber den reaktiven Gruppen der Ausgangskomponenten inerte Lösemittel mitverwendet werden. Geeignete Lösemittel sind beispielsweise die oben als geeignete Lösemittel für das erfindungsgemäße Verfahren beschriebene Lösemittel oder beliebige Gemische solcher Lösemittel.

In einer möglichen Ausführungsform wird bei der Herstellung des Polyisocyanates M) das PDI - gegebenenfalls unter Inertgas, wie beispielsweise Stickstoff, und gegebenenfalls in Gegenwart eines geeigneten Lösungsmittels der genannten Art - bei einer Temperatur zwischen 20 und 100°C vorgelegt. Anschließend wird die alkoholische Komponente B) in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluss an die Urethanisierungsreaktion, d.h. wenn der einem vollständigen Umsatz von Isocyanat- und Hydroxylgruppen theoretisch entsprechende NCO-Gehalt erreicht ist, kann die Allophanatisierung beispielsweise ohne Zusatz eines Katalysators durch Erhitzen des Reaktionsgemisches auf eine Temperatur von 140 bis 200°C gestartet werden. Vorzugsweise kommen zur Beschleunigung der Allophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 80 bis 120°C, in der Regel ausreichend sind.

In einer anderen möglichen Ausführungsform des Verfahrens zur Herstellung des Polyisocyanates M) wird der gegebenenfalls mitzuverwendenden Katalysator dem PDI und/oder der alkoholischen Komponente B) bereits vor Beginn der eigentlichen Umsetzung zugemischt. In diesem Fall reagieren die sich intermediär bildenden Urethangruppen spontan weiter zur gewünschten Allophanatstruktur. Bei dieser Art der einstufigen Reaktionsführung wird das gegebenenfalls den Katalysator enthaltende PDI - gegebenenfalls unter Inertgas, wie beispielsweise Stickstoff, und gegebenenfalls in Gegenwart eines geeigneten Lösungsmittels der genannten Art - in der Regel bei für die Allophanatisierung optimalen Temperaturen im Bereich von 60 bis 140°C, vorzugsweise 80 bis 120°C, vorgelegt und mit der gegebenenfalls den Katalysator enthaltenden alkoholischen Komponente B) zur Reaktion gebracht.

Es ist aber auch möglich, den Katalysator dem Reaktionsgemisch zu einem beliebigen Zeitpunkt während der Urethanisierungsreaktion zuzusetzen. Bei dieser Ausführungsform des Verfahrens wird für die vor der Katalysatorzugabe ablaufende reine Urethanisierungsreaktion in der Regel eine Temperatur im Bereich von 30 bis 120°C, vorzugsweise von 50 bis 100°C, eingestellt. Nach Zugabe eines geeigneten Katalysators wird die Allophanatisierungreaktion schließlich bei Temperaturen von in der Regel 60 bis 140°C, vorzugsweise von 80 bis 120°C, durchgeführt.

Der Verlauf der Umsetzung kann beim Verfahren zur Herstellung des Polyisocyanates M) durch z. B. titrimetrische Bestimmung des NCO-Gehaltes nach DIN EN ISO 11909:2007-05 verfolgt werden. Nach Erreichen des angestrebten NCO-Gehaltes, vorzugsweise wenn der Allophanatisierungsgrad (d. h. der aus dem NCO-Gehalt errechenbare prozentuale Anteil der zu Allophanatgruppen umgesetzten, aus den Hydroxylgruppen der Komponente B) sich intermediär bildenden Urethangruppen) des Reaktionsgemisches mindestens 80 %, besonders bevorzugt mindestens 90 % beträgt, ganz besonders bevorzugt wenn der einer vollständigen Allophanatisierung entsprechende NCO-Gehalt erreicht oder unterschritten ist, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im Allgemeinen aber durch Zugabe geeigneter Katalysatorgifte, beispielsweise Säuren, wie Phosphorsäure, oder Säurechloride, wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigem PDI, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben dem nicht umgesetzten PDI und gegebenenfalls mitverwendeten Lösungsmitteln bei Verzicht auf den Einsatz eines Katalysatorgiftes gegebenenfalls aktiven Katalysator enthalten, können problemlos zur erneuten Allophanatisierung im Verfahren zur Herstellung des Polyisocyanates M) eingesetzt werden.

In einer weiteren Ausführungsform des Verfahrens zur Herstellung des Polyisocyanates M) werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Ausführung des Verfahrens zu ihrer Herstellung stellen die Polyisocyanate M) klare, praktisch farblose Polyisocyanate dar, die, jeweils bezogen auf das lösemittelfreie Festharz, Farbzahlen von unter 100 APHA, vorzugsweise von unter 80 APHA, besonders bevorzugt von unter 60 APHA, und/oder einen NCO-Gehalt von 6,0 bis 18,0 Gew.-%, vorzugsweise 8,0 bis 16,0 Gew.-%, besonders bevorzugt 10,0 bis 15,0 Gew.-%, und/oder einen nach DIN EN ISO 10283:2007-11 gaschromatographisch mit internem Standard gemessenen Rest-Monomeren Gehalt von weniger als 0,14 Gew.-%, bevorzugt weniger als 0,12 Gew.-% und besonders bevorzugt weniger als 0,10 Gew.-%, aufweisen.

Die Viskositäten der Polyisocyanate M) betragen gemessen nach DIN EN ISO 3219:1994-10 bei einer Scherrate von 250 s-1 bei 23°C vorzugsweise weniger als 500 mPas, besonders bevorzugt weniger als 400 mPas, ganz besonders bevorzugt weniger als 300 mPas.

### Polyisocyanat N)

Polyisocyanate N) für das erfindungsgemäße Polyisocyanatgemisch sowie das erfindungsgemäße Verfahren sind beliebige, durch Modifizierung einfacher aliphatischer, cycloaliphatischer, araliphatischer und/oder aromatischer Diisocyanate und/oder Triisocyanate, hergestellte Polyisocyanate mit Uretdion-, Isocyanurat-, Allophanat-, Biuret-, Iminooxadiazindion- und/oder Oxadiazintrionstruktur, wie sie beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP-A 0 339 396 EP-A 0 798 299, EP-A 0 962 454, EP-A 0 962 455, EP-A 2 785 760, EP-A 2 883 895, EP-A 3 107 922, EP-A 3 107 948 und EP-A 3 337 836 beispielhaft beschrieben sind oder um beliebige Gemische solcher Polyisocyanate.

Geeignete Diisocyanate und Triisocyanate A) sind beliebige, auf verschiedene Weise, beispielsweise durch Phosgenierung der korrespondierenden Diamine oder Triamine, die sowohl unter Verwendung fossiler Rohstoffe oder auch aus nachwachsenden Rohstoffen, gegebenenfalls massenbilanziert hergestellt werden können, in der Flüssig- oder Gasphase oder auf phosgenfreien Weg, wie z. B. durch thermische Urethanspaltung, zugängliche Diisocyanate und Triisocyanate, vorzugsweise solche des Molekulargewichtsbereichs 140 bis 400 mit aliphatisch, cycloaliphatisch, araliphatisch und/oder aromatisch gebundenen Isocyanatgruppen, wie z. B. 1,4-Diisocyanatobutan, 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan, 1,9-Diisocyanatononan 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 2,4'- und 4,4'-Diisocyanatodicyclohexylmethan (H₁₂-MDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1-lsocyanato-1-methyl-4(3)isocyanatomethylcyclohexan, Bis-(isocyanatomethyl)-norbornan (NBDI), 4-Isocyanatomethyl-1,8-octandiisocyanat (Triisocyanatononan; TIN), 1,3- und 1,4-Bis(isocyanatomethyl)benzol (Xylylendiisocyanat, XDI), 1,3- und 1,4-Bis-(2-isocyanato-prop-2-yl)-benzol (TMXDI), 1,3-Bis(isocyanatomethyl)-4-methylbenzol, 1,3-Bis(isocyanatomethyl)-4-ethylbenzol, 1,3-Bis(isocyanatomethyl)-5-methylbenzol, 1,3-Bis(isocyanatomethyl)-4,5-dimethylbenzol, 1,4-Bis(isocyanatomethyl)-2,5-dimethylbenzol, 1,4-Bis(isocyanatomethyl)-2,3,5,6-tetramethylbenzol, 1,3-Bis(isocyanatomethyl)-5-tert.-butylbenzol, 1,3-Bis(isocyanatomethyl)-4-chlorbenzol, 1,3-Bis(isocyanatomethyl)-4,5-dichlorbenzol, 1,3-Bis(isocyanatomethyl)-2,4,5,6-tetrachlorbenzol, 1,4-Bis(isocyanatomethyl)-2,3,5,6-tetrachlorbenzol, 1,4-Bis(isocyanatomethyl)-2,3,5,6-tetrabrombenzol, 1,4-Bis(2-isocyanatoethyl)benzol und 1,4-Bis(isocyanatomethyl)naphthalin, 1,2-, 1,3- und 1,4-Diisocyanatobenzol (Phenylendiisocyanat), 2,4- und 2,6-Diisocyanatotoluol (TDI), 2,3,5,6-Tetramethyl-1,4-diisocyanatobenzol, die isomeren Diethylphenylendiisocyanate, Diisopropylphenylendiisocyanate, Diisododecylphenylendiisocyanate und Biphenyldiisocyanate, 3,3'-Dimethoxybiphenyl-4,4'-diisocyanat, 2,2`-, 2,4'- und 4,4'-Diisocyanatodiphenylmethan (MDI), 3,3'-Dimethyldiphenylmethan-4,4'-diisocyanat, 4,4'-Diisocyanatodiphenylethan, 1,5-Diisocyanatonaphthalin (Naphthylendiisocyanat, NDI), Diphenyletherdiisocyanat, Ethylenglycoldiphenyletherdiisocyanat, Diethylenglycoldiphenyletherdiisocyanat, 1,3-Propylenglycoldiphenyletherdiisocyanat, Benzophenondiisocyanat, Triisocyanatobenzol, 2,4,6-Triisocyanatotoluol, Trimethylbenzoltriisocyanat, Diphenylmethan-2,4,4'-triisocyanat, 3-Methyldiphenylmethan-4,6,4'-triisocyanat, die isomeren Naphthalintriisocyanate und Methylnaphthalindiisocyanate, Triphenylmethantriisocyanat, 2,4-Diisocyanato-1-[(5-isocyanato-2-methylphenyl)methyl]benzol oder Mischungen aus mindestens zwei solcher Diisocyanate und Triisocyanate.

Gegebenenfalls können bei der Modifizierung der genannten Diisocyanate und/oder Triisocyanate zu Polyisocyanaten N) in untergeordneten Mengen auch Monoisocyanate, insbesondere solche des Molekulargewichtsbereichs 99 bis 300, wie z. B. n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat, Benzylisocyanat, Phenylisocyanat oder Naphtylisocyanat, mitverwendet werden. Falls überhaupt kommen Monoisocyanate dabei in Mengen von bis 30 Gew.-%, vorzugsweise bis zu 20 Gew.-%, besonders bevorzugt bis zu 10 Gew.-%, bezogen auf die Gesamtmenge an Mono-, Di- und Triisocyanaten, zum Einsatz

Bei der Herstellung der Polyisocyanate N) schließt sich an die eigentliche Modifizierungsreaktion in der Regel ein weiterer Verfahrensschritt zur Abtrennung der nicht umgesetzten überschüssigen monomeren Diisocyanate und/oder Triisocyanate und gegebenenfalls Monoisocyanate an. Diese Monomerenabtrennung erfolgt nach an sich bekannten Verfahren vorzugsweise durch Dünnschichtdestillation im Vakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan.

In einer weiteren bevorzugten Ausführungsform weist das Polyisocyanat N) aliphatisch, araliphatisch und/oder cycloaliphatisch gebundene Isocyanatgruppen auf, bevorzugt auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan ist und besonders bevorzugt mindestens Isocyanuratstrukturen auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan enthält und ganz besonders bevorzugt Isocyanuratstrukturen auf Basis von 1,5-Diisocyanatopentan, 1,6-Diisocyanatohexan und/oder 1-Isocyanato-3,3,5-trimethyl-5-isocyanatomethylcyclohexan enthält.

Bevorzugt kommen im erfindungsgemäßen Polyisocyanatgemisch als Polyisocyanat N) Polyisocyanate der genannten Art zum Einsatz, die einen Gehalt an Isocyanatgruppen von 6,0 bis 26,0 Gew.-%, vorzugsweise von 8,0 bis 25,0 Gew.-%, besonders bevorzugt 10,0 bis 24,0 Gew.-%, und einen Gehalt an monomeren Diisocyanaten von weniger als 0,14 Gew.-%, vorzugsweise weniger als 0,12 Gew.-%, besonders bevorzugt von weniger als 0,10 Gew.-% aufweisen. Für den alternativen, optionalen Fall, dass Triisocyanate und/oder Monoisocyanate zur Herstellung der Polyisocyanate N) eingesetzt wurden, beziehen sich die vorstehend genannten Rest-Monomeren Gehalte von weniger als 0,14 Gew.-%, vorzugsweise weniger als 0,12 Gew.-%, besonders bevorzugt von weniger als 0,10 Gew.-% auf die Summe aller Rest-Gehalte aller eingesetzten Diisocyanate, Triisocyanate und Monoisocyanate. Die NCO-Gehalte werden nach DIN EN ISO 11909:2007-05, die Rest-Monomeren Gehalte nach DIN EN ISO 10283:2007-11 gaschromatographisch mit internem Standard bestimmt.

Besonders bevorzugte Polyisocyanate N) für das erfindungsgemäße Polyisocyanatgemisch sind solche der genannten Art mit ausschließlich aliphatisch und/oder cycloaliphatisch gebundenen Isocyanatgruppen.

Ganz besonders bevorzugte Polyisocyanate N) sind mindestens Isocyanuratstrukturen enthaltende Polyisocyanate auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4`-Diisocyanatodicyclohexylmethan und am meisten bevorzugt mindestens Isocyanuratstrukturen enthaltende Polyisocyanate auf Basis von 1,5-Diisocyanatopentan oder Isocyanato-3,3,5-trimethyl-5-isocyanatomethylcyclohexan.

### Polyisocyanatgemisch und weitere Gegenstände der Erfindung:

Die erfindungsgemäßen Polyisocyanatgemische verhalten sich völlig kristallisationsstabil und bleiben auch bei 5°C und vierwöchiger Lagerung völlig klar und frei von Trübungen. Obwohl sie bevorzugt lösemittelfrei eingesetzt werden, lassen sich bei Bedarf aber auch mit üblichen Lösungsmitteln, beispielsweise den zuvor genannten, beim erfindungsgemäßen Verfahren gegebenenfalls mitzuverwendenden gegenüber Isocyanaten inerten Lösungsmitteln, trübungsfrei verdünnen.

Die erfindungsgemäßen Polyisocyanatgemische stellen wertvolle Ausgangsmaterialien zur Herstellung von Polyurethan-Kunststoffen nach dem Isocyanat-Polyadditionsverfahren dar. Daher ist ein weiterer Gegenstand der Erfindung die Verwendung des erfindungsgemäßen Polyisocyanatgemisches oder des Polyisocyanatgemisches, erhältlich oder hergestellt, bevorzugt direkt hergestellt, durch das erfindungsgemäße Verfahren als Ausgangskomponente bei der Herstellung von Polyurethankunststoffen, Polyharnstoffkunststoffen und/oder Polythiourethankunststoffen, bevorzugt zur Herstellung einer Beschichtung auf einem Substrat, wobei es sich bei dem Substrat bevorzugt um mineralische oder metallische Untergründe, Kunststoff oder Holz handelt.

Die erfindungsgemäßen Polyisocyanatgemische eignen sich in hervorragender Weise als Härter für Kunststoffe. Daher ist eine Zusammensetzung enthaltend entweder mindestens ein erfindungsgemäßes Polyisocyanatgemisch und mindestens ein gegenüber Isocyanatgruppen reaktives Bindemittel oder enthaltend mindestens ein erfindungsgemäßes Polyisocyanatgemisch, erhältlich oder hergestellt gemäß dem erfindungsgemäßen Verfahren, und mindestens ein gegenüber Isocyanatgruppen reaktives Bindemittel ein weiterer Gegenstand der vorliegenden Erfindung.

In einer bevorzugten Ausführungsform enthält die erfindungsgemäße Zusammensetzung das mindestens eine gegenüber Isocyanatgruppen reaktive Bindemittel in einer Komponente 1) und das mindestens eine erfindungsgemäße Polyisocyanatgemisch in einer Komponente 2) oder das mindestens eine Polyisocyanatgemisch, erhältlich oder hergestellt nach dem erfindungsgemäßen Verfahrens, in einer Komponente 2). Eine solche Zusammensetzung wird im Folgenden auch als Zweikomponenten-System bezeichnet.

Hierbei oder alternativ ist es weiterhin bevorzugt, dass das mindestens eine gegenüber Isocyanatgruppen reaktive Bindemittel eine Polyhydroxylverbindung, eine Polyaminverbindung und/oder ein Polythiol ist.

Geeignete Polyhydroxylverbindungen für die erfindungsgemäße Zusammensetzung sind bevorzugt Polyesterpolyole, Polyetherpolyole, Polycarbonatpolyole, Polyestercarbonatpolyole, Ricinusöl, Abmischungen von Ricinusöl mit Keton/Formaldehyd-Kondensaten der in der GB-PS 1 182 884 oder EP-A 364 738 beschriebenen Art oder beliebige Gemische solcher Polyhydroxylverbindungen.

Als gegenüber Isocyanatgruppen reaktive Bindemittel geeignete Polyesterpolyole sind beispielsweise solche eines mittleren, aus Funktionalität und Hydroxylzahl berechenbaren Molekulargewichtes von 200 bis 3000, vorzugsweise von 250 bis 2500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 wie z. B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat.

Die zur Herstellung der Polyesterpolyole verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als Polyhydroxylverbindung bevorzugt eingesetzte Art von Polyesterpolyolen sind jedoch solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ-Butyrolacton, γ- und δ-Valerolacton, ε-Caprolacton, 3,5,5- und 3,3,5-Trimethylcaprolacton oder beliebige Gemische solcher Lactone.

Die Herstellung erfolgt im Allgemeinen in Gegenwart von Katalysatoren wie beispielsweise Lewis- oder Brönstedt-Säuren, organischen Zinn- oder Titanverbindungen bei Temperaturen von 20 bis 200 °C, vorzugsweise 50 bis 160 °C.

Als gegenüber Isocyanatgruppen reaktive Bindemittel geeignete Polyetherpolyole sind beispielsweise solche eines mittleren, aus Funktionalität und Hydroxylzahl berechenbaren Molekulargewichtes von 200 bis 6000, vorzugsweise 250 bis 4000, mit einem Hydroxylgruppen-Gehalt von 0,6 bis 34 Gew.-%, vorzugsweise 1 bis 27 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400, wie sie oben bei der Herstellung von Polyesterpolyolen beschrieben wurden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den als Polyhydroxylverbindungen für die erfindungsgemäßen Zusammensetzungen bevorzugt eingesetzten Polyetherpolyolen handelt es sich um solche, deren Alkylenoxideinheiten zu mindestens 80 mol-%, vorzugsweise jedoch ausschließlich aus Propylenoxideinheiten bestehen.

Als gegenüber Isocyanatgruppen reaktive Bindemittel für die erfindungsgemäßen Zusammensetzungen geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z. B. Diphenylcarbonat, oder Phosgen herstellen lassen.

Geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-AS 1 770 245 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat erhalten werden können.

Gegebenenfalls können die Polyhydroxylverbindungen darüber hinaus zur gezielten Einstellung der Viskosität der erfindungsgemäßen Zusammensetzungen auch bis zu 50 Gew.-%, vorzugsweise bis zu 20 Gew.-%, bezogen auf die Gesamtmenge an Polyhydroxylverbindungen, an einfachen mehrwertigen, gegebenenfalls Ethersauerstoff aufweisenden Alkoholen des Molekulargewichtsbereichs 62 bis 400 enthalten. Hierbei handelt es sich beispielsweise um bei Raumtemperatur flüssige, insbesondere eine Viskosität bei 23 °C von weniger als 500 mPas aufweisende Vertreter der oben in der Liste der mehrwertigen Alkohole genannten Art, wie z. B. 1,2-Ethandiol, 1,2- und 1,3-Propandiol oder 1,4-Butandiol, aber auch um einfache Etheralkohole, wie z. B. Diethylenglykol oder Dipropylenglykol.

Besonders bevorzugte Polyhydroxyverbindungen für die erfindungsgemäßen Zusammensetzungen sind solche, die in lösemittelfreier Form vorliegen, eine mittlere OH-Funktionalität von 2 bis 4 und eine Viskosität bei 23 °C von weniger als 30000 mPas, vorzugsweise weniger als 10000 mPas aufweisen. Ganz besonders bevorzugt sind lösemittelfreie Polyetherpoylole, Ricinusöl, Abmischungen von Ricinusöl mit Keton/Formaldehyd-Kondensaten oder beliebige Mischungen solcher Polyhydroxyverbindungen.

Besonders bevorzugt ist es bei der erfindungsgemäßen Zusammensetzung, dass das mindestens eine gegenüber Isocyanatgruppen reaktive Bindemittel wenigstens eine hydroxyfunktionelle Verbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des gegenüber Isocyanatgruppen reaktiven Bindemittels umfasst.

Geeignete gegenüber Isocyanatgruppen reaktive Bindemittel für die erfindungsgemäße Zusammensetzung sind auch Polyaminverbindungen, wie z. B. Polyasparaginsäureesterderivate oder auch Polyamine, deren Aminogruppen in blockierter Form vorliegen, wie z. B. Polyketimine, Polyaldimine oder Oxazolane, und die unter Feuchtigkeitseinfluß Aminogruppen und im Falle der Oxazolane auch Hydroxylgruppen freisetzen, die unter Vernetzung mit den Isocyanatgruppen der erfindungsgemäßen Polyisocyanatgemische abreagieren.

Bevorzugte Polyaminverbindungen für die erfindungsgemäßen Zusammensetzungen sind Polyasparaginsäureester der Formel (V) 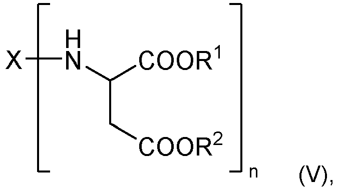 in welcher
- X: für einen n-wertigen, gegenüber Isocyanatgruppen inerten Rest steht, wie er durch Entfernen der primären Aminogruppen aus einem organischen Amin des Molekulargewichtsbereiches 60 bis 6000 mit n primären aliphatisch und/oder cycloaliphatisch gebundenen Aminogruppen erhalten wird, der gegebenenfalls ein oder mehrere Heteroatome und/oder weitere, gegenüber Isocyanatgruppen reaktive und/oder bei Temperaturen bis 100 °C inerte funktionelle Gruppen enthält,
- R¹ und R²: für gleiche oder verschiedene organische Reste mit 1 bis 18 Kohlenstoffatomen stehen und
- n: für eine ganze Zahl > 1 steht.

Die Herstellung solcher Polyasparaginsäureester ist prinzipiell bekannt und kann beispielsweise, wie in EP-A 0 403 921, EP-A 0 689 881 oder EP-A 0 816 326 beschrieben, durch Reaktion einer primäre Aminogruppen enthaltenden Komponente der Formel (VI) 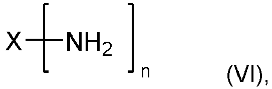 in welcher
- X: für einen n-wertigen, gegenüber Isocyanatgruppen inerten Rest steht, wie er durch Entfernen der primären Aminogruppen aus einem organischen Amin des Molekulargewichtsbereiches 60 bis 6000 mit n primären aliphatisch und/oder cycloaliphatisch gebundenen Aminogruppen erhalten wird, der gegebenenfalls ein oder mehrere Heteroatome und/oder weitere, gegenüber Isocyanatgruppen reaktive und/oder bei Temperaturen bis 100 °C inerte funktionelle Gruppen enthält, und
- n: für eine ganze Zahl ≥ 1 steht,
mit Fumarsäureestern und/oder Maleinsäureestern der Formel (VII)

R¹OOC-CH=CH-COOR² (VII),

in welcher R¹ und R² für gleiche oder verschiedene organische Reste mit 1 bis 18 Kohlenstoffatomen stehen, erfolgen.

Geeignete Amine zur Herstellung der Polyasparaginsäureester sind beispielsweise difunktionelle Amine, d. h. solche der Formel (VI), in denen n für 2 steht, wie z. B. Ethylendiamin, 1,2-Diaminopropan, 1,4-Diaminobutan, 1,5-Diaminopentan, 1,5-Diamino-2-methylpentan (Dytek^{®} A der Fa. DuPont), 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethylcyclohexan (IPDA), 1,3-Diamino-2- und/oder -4-methylcyclohexan, Isopropyl-2,4- und/oder 2,6-diaminocyclohexan, 1,3-Bis-(aminomethyl)-cyclohexan, 2,4'- und/oder 4,4'-Diamino-dicyclohexylmethan, 3,3'-Dimethyl-4,4'-diamino-dicyclohexylmethan (Laromin^{®} C 260; BASF SE, Ludwigshafen, DE), die isomeren, eine Methylgruppe als Kernsubstituenten aufweisenden Diaminodicyclohexylmethane (C-Monomethyl-diaminodicyclohexylmethane), 3(4)-Aminomethyl-1-methylcyclohexylamin und 1,3-Bis-(aminomethyl)-benzol.

Geeignete tri- oder höherfunktionelle Amine zur Herstellung der Polyasparaginsäureester sind solche der Formel (VI) in denen n für eine ganze Zahl ≥ 3 steht, wie z. B. 4-Aminomethyl-1,8-octandiamin, 2,2',2"-Triaminotriethylamin, 1,3,5-Tris-(aminomethyl)-2,4,6-triethylbenzol, Tris-1,1,1-aminoethylethan, 1,2,3-Triamionpropan, Tris-(3-aminopropyl)-amin und N,N,N',N'-Tetrakis-(2-aminoethyl)-ethylendiamin.

Geeignete Amine (VI) zur Herstellung der Asparaginsäureester bzw. Polyasparaginsäureester sind prinzipiell auch Monoamine (n = 1) und Diamine (n = 2), die weitere, im Temperaturbereich von 20 bis 200°C gegenüber Isocyanaten reaktive Gruppen enthalten, beispielsweise Aminoalkohole, wie z. B. 2-Aminoethanol, die isomeren Aminopropanole und -butanole, 3-Amino-1,2-propandiol und 1,3- Diamino-2-propanol.

Auch niedermolekulare Polyetherpolyamine mit aliphatisch gebundenen primären Aminogruppen, wie sie beispielsweise unter der Bezeichnung Jeffamin^{®} (Huntsman Performance Products, The Woodlands, Texas, USA) vertrieben werden, stellen prinzipiell geeignete Aminokomponenten zur Herstellung geeigneter Polyasparaginsäureester dar.

Bevorzugte aminofunktionelle Reaktionspartner für die erfindungsgemäßen Polyisocyanatgemische sind jedoch Polyasparaginsäureester der Formel (VI), in welcher n für 2 steht, insbesondere aliphatische und/oder cycloaliphatische Diamine der oben genannten Art. Ganz besonders bevorzugte Polyasparaginsäureester sind solche auf Basis von 1,5-Diamino-2-methylpentan, 2,4'- und/oder 4,4'-Diamino-dicyclohexylmethan und/oder 3,3'-Dimethyl-4,4'-diamino-dicyclohexylmethan.

Bei der Herstellung der Asparaginsäureester bzw. Polyasparaginsäureester kommen Fumarsäurediester bzw. Maleinsäurediester der Formel (VII) zum Einsatz, in welcher die Reste R¹ und R^{Z} für gleiche oder verschiedene Reste stehen und organische Reste mit 1 bis 18, vorzugsweise 1 bis 9, besonders bevorzugt 1 bis 4, Kohlenstoffatomen bedeuten.

Bevorzugt kommen Maleinsäureester Formel (VII) zum Einsatz, in welcher die Reste R¹ und R² für gleiche oder verschiedene Reste stehen und einen Methyl-, Ethyl-, n-Butyl- oder 2-Ethylhexylrest bedeuten. Als Reaktionspartner für die erfindungsgemäßen Polyisocyanatgemische ganz besonders bevorzugte Polyasparaginsäureester sind solche, die unter Verwendung von Maleinsäurediethylester hergestellt wurden und einen Gehalt an Fumarsäurediester von weniger als 0,1 Gew.-% aufweisen.

Die Herstellung der Asparaginsäureester bzw. Polyasparaginsäureeste kann in Lösung durchgeführt werden, erfolgt bevorzugt aber lösemittelfrei. In beiden Fällen erfolgt bevorzugt eine äquimolare Umsetzung des Amins (VI) mit dem Fumarsäurediester und/oder Maleinsäurediester (VII). Zur gezielten Variation anwendungstechnischer Eigenschaften kann das Äquivalenzverhältnis von Maleinsäureester und/oder Fumarsäureester (VII) zu Aminogruppen der Komponente (VI) von 1,2 : 1 bis 1 : 2 variiert werden. Für den Fall, dass im erfindungsgemäßen Beschichtungsmittel Mischungen von Asparaginsäureester bzw. Polyasparaginsäureestern eingesetzt werden, kann die Herstellung der Polyasparaginsäureester getrennt oder in einem Reaktionsgefäß erfolgen.

Die erfindungsgemäße Zusammensetzung kann als gegenüber Isocyanatgruppen reaktive Bindemittel gegebenenfalls auch Verbindungen enthalten, die mindestens zwei Strukturelemente der Formel (VIII) 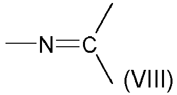 aufweisen. Diese Verbindungen, die im Rahmen der vorliegenden Erfindung als Polyaldimine bzw. Polyketimine bezeichnet werden, weisen in der Regel Molekulargewichte von 112 bis 6500, vorzugsweise von 140 bis 2500, besonders bevorzugt von 140 bis 458, auf.

Zu den bevorzugten, gegebenenfalls in den erfindungsgemäßen Zusammensetzungen eingesetzten Polyaldiminen bzw. Polyketiminen zählen Verbindungen der Formel (IX) 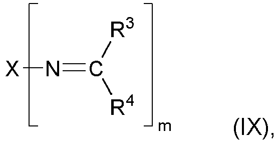 in welcher
- R³ und R⁴: für gleiche oder verschiedene Reste stehen und Wasserstoff oder inerte organische Reste, wie z. B. Kohlenwasserstoffreste mit bis zu 8 Kohlenstoff-atomen, insbesondere Alkylreste mit 1 bis 8 Kohlenstoffatomen bedeuten, und wobei die Reste R⁵ und R⁶ auch zusammen mit dem Kohlenstoffatom einen 5-oder 6-gliedrigen cycloaliphatischen Ring bilden können, mit der Maßgabe, dass die Reste R³ und R⁴ nicht gleichzeitig für Wasserstoff stehen, und
- X: die oben bei der Beschreibung der Amine genannte Bedeutung aufweist und
- m: für eine ganze Zahl ≥ 2 steht.

Besonders bevorzugt sind Verbindungen der Formel (IX), in der alle Reste R³ für Wasserstoff stehen, die Reste R⁴ für Kohlenwasserstoffreste mit bis zu 8 Kohlenstoffatomen stehen und m = 2 ist.

Die zur Herstellung der Polyaldimine bzw. Polyketimine verwendbaren Aldehyde bzw. Ketone entsprechen solchen der Formel (X) 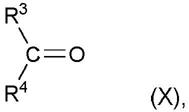 in welcher R³ und R⁴die vorstehend genannte Bedeutung haben, und weisen vorzugsweise ein Molekulargewicht von 58 bis 198 (Ketone) bzw. 44 bis 128 (Aldehyde) auf.

Geeignete Aldehyde zur Herstellung der gegebenenfalls in den erfindungsgemäßen Zusammensetzungen eingesetzten Polyaldimine sind beispielsweise Acetaldehyd, Propionaldehyd, n-Butyraldehyd, Isobutyraldehyd, Trimethylacetataldehyd, 2,2-Dimethylpropanal, 2-Ethylhexanal, 3-Cyclohexan-1-carboxaldehyd, Hexanal, Heptanal, Octanal, Valeraldehyd, Benzaldehyd, Tetrahydrobenzaldehyd, Hexahydrobenzaldehyd, Propargylaldehyd, p-Toluylaldehyd, Phenylethanal, 2-Methylpentanal, 3-Methylpentanal, 4-Methylpentanal und/oder Sorbinaldehyd.

Besonders bevorzugt sind dabei n-Butyraldehyd, Isobutyraldehyd, Trimethylacetaldehyd, 2-Ethylhexanal und Hexahydrobenzaldehyd.

Geeignete Ketone zur Herstellung der gegebenenfalls in den erfindungsgemäßen Zusammensetzungen eingesetzten Polyketimine sind beispielsweise Aceton, Methylethylketon, Methylpropylketon, Methylisopropylketon, Methylbutylketon, Methylisobutylketon, Methyl-tert.-butylketon, Methyl-n-amylketon, Methylisoamylketon, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, 5-Methyl-3-heptanon, 1-Phenyl-2-propanon, Acetophenon, Methylnonylketon, Dinonylketon und/oder 3,3,5-Trimethylcyclohexanon.

Besonders bevorzugt sind dabei Cyclopentanon, Cyclohexanon, Methylcyclopentanon, Methylcyclohexanon, 3,3,5-Trimethylcyclopentanon, Cyclobutanon, Methylcyclobutanon, Aceton, Methylethylketon, Methylisobutylketon.

Selbstverständlich können auch beliebige Mischungen verschiedener Ketone bzw. Aldehyde und auch Mischungen von Ketonen mit Aldehyden eingesetzt werden um spezielle Eigenschaften zu erzielen.

Bei den zur Herstellung der gegebenenfalls in den erfindungsgemäßen Zusammensetzungen als Reaktionspartner für die erfindungsgemäßen Polyisocyanatgemische eingesetzten Polyaldimine bzw. Polyketimine zum Einsatz gelangenden Polyaminen handelt es sich um die bereits oben im Zusammenhang mit der Herstellung der Polyasparaginsäureester explizit beschriebenen Amine der allgemeinen Formel (VI), in denen n für ganze Zahl ≥ 2 steht, bzw. beliebige Gemische derartiger Polyamine. Bevorzugtes Polyamin zur Herstellung der Polyaldimine bzw. Polyketimine ist 1-Amino-3,3,5-trimethyl-5-aminomethylcyclohexan (IPDA). Ganz besonders bevorzugt ist das durch Reaktion von IPDA mit Isobutyraldehyd erhältliche Polyaldimin.

Die Herstellung der Polyaldimine bzw. Polyketimine erfolgt nach an sich bekannten Methoden durch Umsetzung der Ausgangskomponenten unter Einhaltung eines stöchiometrischen Verhältnisses von Aminogruppen zu Aldehyd- bzw. Ketogruppen von 1:1 bis 1:1,5. Gegebenenfalls können zur Reaktionsbeschleunigung katalytische Mengen von sauren Substanzen wie z. B. p-Toluolsulfonsäure, Chlorwasserstoff, Schwefelsäure oder Aluminiumchlorid mitverwendet werden.

Die Umsetzung erfolgt im Allgemeinen innerhalb des Temperaturbereichs von 20 bis 180°C, wobei die Reaktion gegebenenfalls unter Verwendung eines Schleppmittels (z. B. Toluol, Xylol, Cyclohexan und Octan) zur Entfernung des Reaktionswassers, so lange durchgeführt wird, bis die berechnete Menge an Wasser (1 Mol Wasser pro Mol primäre Aminogruppe) abgespalten ist bzw. bis kein Wasser mehr abgespalten wird. Anschliessend werden die Phasen getrennt bzw. das Schleppmittel und gegebenenfalls vorliegende nicht umgesetzte Edukte destillativ abgetrennt. Die so erhaltenen Produkte können ohne weitere Reinigung in den erfindungsgemäßen Zusammensetzungen eingesetzt werden.

Die erfindungsgemäßen Polyisocyanatgemische können in den erfindungsgemäßen Zusammensetzungen darüber hinaus auch mit Verbindungen kombiniert werden, die mindestens eine Thiolgruppe aufweisen.

Hierbei handelt es sich beispielsweise um die aus der EP-A 3 872 108 bekannten Polythiole, wie z. B. einfache Alkanthiole, Thioethergruppen enthaltenden Polythiole, Polyetherthiole, Polyesterthiole, aromatische Thioverbindungen und/oder Mercaptoalkohole.

In einer weiteren bevorzugten Ausführungsform ist die erfindungsgemäße Zusammensetzung eine Beschichtungszusammensetzung, welche optional in der Beschichtungstechnologie übliche Hilfs- und Zusatzstoffe enthalten kann, wie beispielsweise Füllstoffe, Pigmente, Weichmacher, Härtungskatalysatoren, UV-Schutzmittel, Antioxidantien, Mikrobizide, Algizide, Wasserfänger, Thixotropieträger, Netzmittel, Verlaufshilfsmittel, Mattierungsmittel, Antirutschmittel, Entlüftungsmittel oder Extender. Die Hilfs- und Zusatzstoffe werden je nach den Erfordernissen der durch die Applikation der Beschichtung zu lösenden Probleme und ihrer Verträglichkeit in die Komponente 1) und/oder 2) eingemischt. So sollten beispielsweise wasserhaltige oder stark alkalische reagierende Zusatzstoffe nicht der Komponente 2) sondern der Komponente 1) zugemischt werden.

Geeignete Füllstoffe sind beispielsweise Stein- oder Kunststoffgranulate, Glaskugeln, Sand oder Kork, die gegebenenfalls in Mengen von bis zu 800 Gew.-% bezogen auf die aus den Einzelkomponenten 1) und 2) bestehende erfindungsgemäße Zusammensetzung eingesetzt werden können.

Geeignete Pigmente sind beispielsweise Titandioxid, Zinkoxid, Eisenoxide, Chromoxide oder Ruße. Eine ausführliche Übersicht über Pigmente für Anstrichstoffe gibt das "Lehrbuch der Lacke und Beschichtungen, Band 5: Pigmente, Füllstoffe und Farbmetrik", H. Kittel, J. Spille, S. Hirzel Verlag GmbH, 2002. Die beispielhaft genannten Pigmente können, falls überhaupt, in Mengen von bis zu 100 Gew.-% bezogen auf die aus den Einzelkomponenten 1) und 2) bestehende erfindungsgemäße Zusammensetzung eingesetzt werden.

Zur Viskositätseinstellung der gebrauchsfertigen Beschichtungsmittel können auch Weichmacher mitverwendet werden. Geeignet sind beispielsweise Phthalsäure-, Adipinsäure- oder Phosphorsäureester von C₄-C-₁₈-Alkanolen und/oder Vinylester von Alkarylsulfonsäuren, die, falls überhaupt, in Mengen von bis zu 30 Gew.-%, bezogen auf die aus den Einzelkomponenten 1) und 2) bestehende erfindungsgemäße Zusammensetzung eingesetzt werden.

Weitere, in den erfindungsgemäßen Beschichtungszusammensetzungen gegebenenfalls mitverwendete Hilfs- und Zusatzstoffe sind beispielsweise UV-Schutzmittel, Antioxidantien, Mikrobizide, Algizide, Wasserfänger, Thixotropieträger, Netzmittel, Verlaufsmittel, Mattierungsmittel, Antirutschmittel, Entlüftungsmittel oder Extender. Derartige Hilfs- und Zusatzmittel sind beispielsweise in "Lehrbuch der Lacke und Beschichtungen Band 4: Lösemittel, Weichmacher und Additive", H. Kittel, M. Ortelt, S. Hirzel Verlag GmbH, 2007 beschrieben. Als Wasserfänger wirkende Trockenmittel sind beispielsweise in "Kunststoff Handbuch 7, Polyurethane", Carl-Hanser-Verlag, München - Wien, 1983, S. 545 näher beschrieben. Die Gesamtmenge derartiger weiterer Hilfs- und Zusatzstoffe beträgt im Allgemeinen 0 bis 25 Gew.-%, bezogen auf die aus den Einzelkomponenten 1) und 2) bestehende erfindungsgemäße Zusammensetzung.

Die Herstellung der erfindungsgemäßen Beschichtungszusammensetzungen erfolgt durch Vermischen der Einzelkomponenten, beispielsweise unter Verwendung der bekannten Dissolver oder Vakuumdissolver, die oftmals bevorzugt sind, um eine weitgehende Entgasung der Beschichtungsmittel zu erreichen.

Die erfindungsgemäßen Beschichtungszusammensetzungen werden bevorzugt lösemittelfrei eingesetzt. Bei Bedarf können sie selbstverständlich aber auch, beispielsweise zur Erniedrigung der Viskosität, mit geeigneten, gegenüber den in der Zusammensetzung vorliegenden reaktiven Gruppen inerten Lösemitteln verdünnt werden. Geeignete Lösemittel hierfür sind insbesondere die an sich bekannten Lacklösemittel, die wie vorstehend beschrieben auch beim erfindungsgemäßen Verfahren gegebenenfalls mitverwendet werden können.

Im Allgemeinen besitzen die mit den erfindungsgemäßen Polyisocyanatgemischen formulierten Beschichtungsmittel schon bei Raumtemperaturtrocknung gute lacktechnische Eigenschaften. Selbstverständlich lassen sich die erfindungsgemäßen Zusammensetzungen jedoch auch unter forcierten Bedingungen bei erhöhter Temperatur bzw. durch Einbrennen bei Temperaturen bis 260 °C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tertiäre Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Bismut(III)-2-ethylhexanoat, Bismut(III)-octoat oder Molybdänglykolat.

Die erfindungsgemäßen Polyisocyanatgemische eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wässriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gemäß einer bevorzugten Ausführungsform können die Isocyanatgruppen der erfindungsgemäßen Polyisocyanatgemische anteilig oder vollständig mit wenigstens einem Blockierungsmittel umgesetzt sein.

Bei diesen Blockierungsmitteln handelt es sich insbesondere um, aus der Polyurethanchemie an sich bekannte Blockierungsmittel wie beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Diisopropylamin, Benzyl-tert-butylamin oder beliebige Gemische dieser Blockierungsmittel.

In blockierter Form lassen sich die erfindungsgemäßen Polyisocyanatgemische auch in Kombination mit den obengenannten Lackbindemitteln oder Lackbindemittelkomponenten im Sinne von Einkomponenten-PUR-Einbrennsystemen einsetzen.

In allen Lackkombinationen liegen die erfindungsgemäßen Polyisocyanatgemische und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen. Gegebenenfalls können die erfindungsgemäßen Polyisocyanatgemische in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Polyisocyanatgemische formulierten Beschichtungen kommen beliebige Substrate in Betracht,

Ein weiterer Gegenstand der Erfindung ist ein Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer erfindungsgemäßen Zusammensetzung und
c) Aushärten der Zusammensetzung gegebenenfalls unter Wärmezufuhr.

Weitere Gegenstände der Erfindung sind somit Beschichtungsmittel enthaltend die erfindungsgemäßen Polyisocyanatgemische, sowie ein beschichtetes Substrat, erhältlich oder hergestellt durch das erfindungsgemäße Verfahren,

Die erfindungsgemäßen Zweikomponenten-Polyurethan-, Polyharnstoff- und Polythiourethan-Beschichtungsmittel eignen sich zur Beschichtung beliebiger Substrate, wie z. B. Metall, Holz, Glas, Stein, keramische Materialien, Beton, harte und flexible Kunststoffe, Textilien, Leder und Papier, die vor der Beschichtung gegebenenfalls auch mit üblichen Grundierungen versehen werden können. Sie lassen sich insbesondere in lösemittelfreier Form in hohen Schichtdicken von beispielsweise bis zu 5 mm nach an sich bekannten Methoden, wie Verspritzen, Rollen, Rakeln oder Spachteln applizieren.

Sie härten bereits bei Raumtemperatur blasenfrei zu licht- und wetterbeständigen Lackfilmen aus, die sich durch eine hohe Härte und hervorragende Abriebbeständigkeit auszeichnen und dabei gleichzeitig hohe Elastizitäten und Reißfestigkeiten aufweisen.

Die erfindungsgemäßen Beschichtungsmittel eignen sich insbesondere zur Beschichtung mineralischer Untergründe, beispielsweise zur Herstellung hochabriebbeständiger Fußboden- oder Balkonbeschichtungen, als Flüssigkunststoff zur Dachabdichtung oder Betonsanierung oder auch als Bindemittel für dekorative Zierkiesmörtel.

Neben der beschriebenen Verwendung zur Herstellung von Überzügen auf beliebigen Substraten, lassen sich die erfindungsgemäßen Beschichtungsmittel als lösemittelfreie Zweikomponenten-Polyurethan-, Polyharnstoff- und/oder Polythiourethan-Beschichtungsmittel beispielsweise auch sehr vorteilhaft zur Herstellung lichtechter Vergußmassen einsetzen.

Die erfindungsgemäßen Beschichtungsmittel können z.B. als Zweikomponenten-System, umfassend eine Vernetzerkomponente, enthaltend mindestens ein erfindungsgemäßes Polyisocyanatgemisch, und eine Bindemittelkomponente, enthaltend mindestens ein Lackbindemittel oder eine Lackbindemittelkomponente mit gegenüber Isocyanatgruppen reaktionsfähigen Gruppen, oder als Einkomponenten-System, enthaltend mindestens ein in blockierter Form vorliegendes erfindungsgemäßes Polyisocyanatgemisch, vorliegen. Solche Systeme sind ebenfalls Gegenstand der vorliegenden Erfindung.

Neben der bevorzugten Verwendung als Vernetzerkomponenten für lösemittelhaltige oder wässrige und bevorzugt lösemittelfreie Zweikomponenten-Polyurethan-, Polyharnstoff- und/oder Polythiourethanlacke eignen sich die erfindungsgemäßen Polyisocyanatgemische hervorragend als Vernetzer für lösemittelfreie oder lösemittelhaltige Klebstoffbindemittel oder wässrige Dispersionsklebstoffe, oder auch als Aufbaukomponente zur Herstellung lichtechter kompakter oder geschäumter Polyurethan-Formkörper.

Daher sind ein weiterer Gegenstand der Erfindung Polyurethane, Polyharnstoffe und/oder Polythiourethane, erhältlich oder hergestellt durch Umsetzung mindestens eines erfindungsgemäßen Polyisocyanatgemisches mit wenigstens einer hydroxy-, amino- und/oder thiofunktionellen Komponente.

Die für das erfindungsgemäße Verfahren oder das erfindungsgemäße Polyisocyanatgemisch als bevorzugt gekennzeichneten Merkmale sind auch für die weiteren Erfindungsgegenstände bevorzugt.

Die nachfolgenden Beispiele dienen zur Verdeutlichung der vorliegenden Erfindung, sollen aber keinesfalls als Einschränkung des Schutzbereichs verstanden werden.

### Beispiele

Alle Prozentangaben beziehen sich, soweit nichts Anderslautendes vermerkt, auf das Gewicht.

Die Bestimmung der NCO-Gehalte erfolgte titrimetrisch nach DIN EN ISO 11909:2007-05.

Sämtliche Viskositätsmessungen erfolgten mit einem Physica MCR 51 Rheometer der Fa. Anton Paar Germany GmbH (DE) nach DIN EN ISO 3219:1994-10 bei einer Scherrate von 250 s⁻¹.

Die Restmonomerengehalte wurden nach DIN EN ISO 10283:2007-11 gaschromatographisch mit internem Standard gemessen.

Die Gehalte an Natrium- und Kaliumkationen wurden durch induktiv gekoppelte Plasma-Atom-Emissionsspektrometrie (ICP-OES) nach DIN EN ISO 11885:2009-09 nach Mikrowellenaufschluss bestimmt. Die Nachweisgrenze liegt bei diesem Verfahren bei <1 ppm.

Die Messung der Platin-Cobalt-Farbzahl erfolgte spektrofotometrisch nach DIN EN ISO 6271-2:2005-03 mit einem LICO 400-Spektrofotometer der Fa. Lange, DE.

Die Gehalte (mol-%) der in den erfindungsgemäßen Polyisocyanaten vorliegenden Allophanat-, Urethan- und gegebenenfalls Isocyanurat- und/oder Uretdionstrukturen wurden aus den Integralen protonenentkoppelter ¹³C-NMR-Spektren (aufgenommen an einem Gerät Bruker DPX-400) errechnet und beziehen sich jeweils auf die Summe an vorliegenden Allophanat-, Urethan-, Isocyanuratstrukturen und/oder Uretdionstrukturen. Im Falle von in CDCl₃ gelösten PDI- und HDI-Polyisocyanaten weisen die einzelnen Strukturelemente folgende chemische Verschiebungen (in ppm) auf: Allophanat: 155,7 und 153,8; Urethan: 156,3; Isocyanurat: 148,4; Uretdion: 157,1.

Shore-Härten wurden nach DIN 53505 mit Hilfe eines Shore-Härteprüfgerätes Zwick 3100 (Fa. Zwick, DE) gemessen.

Der Weiterreißwiderstand der erhaltenen Beschichtungen wurde an freien Filmen nach DIN ISO 34-1 bestimmt. Ebenfalls an freien Filmen wurden Bruchdehnung und Bruchspannung nach DIN EN ISO 527-1 ermittelt.

### Ausgangsverbindungen

### Polyisocyanat M1)

1234 g (8,0 mol) PDI wurden bei einer Temperatur von 95°C unter trockenem Stickstoff und Rühren vorgelegt und mit 0,16 g Zink-(II)-2-ethyl-1-hexanoat als Katalysator versetzt. Über einen Zeitraum von ca. 45 min wurden 309 g (1,0 mol) eines im statistischen Mittel dreifach ethoxylierten Laurylakohols (OH-Zahl: 181,8 mg KOH/g, Na-Gehalt: 28 mg/kg, K-Gehalt: < 1 mg/kg) zugetropft, wobei die Temperatur der Mischung aufgrund der exotherm einsetzenden Reaktion bis auf 100°C anstieg. Das Reaktionsgemisch wurde anschließend bei 100°C weiter gerührt bis der NCO-Gehalt nach ca. 1 h auf 35,6 % abgesunken war. Der Katalysator wurde durch Zugabe von 0,16 g ortho-Phosphorsäure deaktiviert und das nicht umgesetzte monomere PDI bei einer Temperatur von 130°C und einem Druck von 0,1 mbar im Dünnschichtverdampfer abgetrennt. Man erhielt 723 g eines praktisch farblosen klaren Polyisocyanatgemisch, das folgende Kenndaten und Zusammensetzung aufwies:

| | | |
|---|---|---|
| NCO-Gehalt: | 14,1 % | |
| monomeres PDI: | 0,03 % | |
| Viskosität (23°C): | 290 mPas | |
| Farbzahl (APHA): | 21 Hazen | |
| Zusammensetzung: | Allophanat: | 70,3 mol-% |
| | Urethan: | 4,2 mol-% |
| | Isocyanurat: | 24,9 mol-% |
| | Uretdion: | 0,6 mol-% |

### Polyisocyanat N1)

Isocyanuratgruppen enthaltendes PDI-Polyisocyanat, hergestellt durch katalytische Trimerisierung von PDI nach dem in der WO 2016/146579 für die Polyisocyanatkomponente A2) beschriebenen Verfahren. Die Reaktion wurde bei einem NCO-Gehalt der Rohmischung von 36,7 % durch Zugabe einer äquimolaren Menge an Dibutylphosphat, bezogen auf eingesetzte Katalysatormenge, und 30 minütiges Nachrühren bei 80°C deaktiviert. Anschließend wurde nicht umgesetztes PDI durch Dünnschichtdestillation bei einer Temperatur von 140°C und einem Druck von 0,5 mbar abgetrennt.

| | |
|---|---|
| NCO-Gehalt: | 21,8 % |
| monomeres PDI: | 0,09 % |
| Viskosität (23 °C): | 9850 mPas |
| Farbzahl (Hazen): | 34 |

### Polyisocyanat N2)

Isocyanuratgruppen enthaltendes HDI-Polyisocyanat, hergestellt durch katalytische Trimerisierung von HDI in Anlehnung an Beispiel 11 der EP-A 330 966, mit der Änderung, dass als Katalysatorlösemittel 2-Ethylhexanol statt 2-Ethyl-1,3-hexandiol eingesetzt wurde und die Reaktion bei einem NCO-Gehalt der Rohmischung von 42,5 % durch Zugabe von Dibutylphosphat gestoppt wurde. Anschließend wurde nicht umgesetztes HDI durch Dünnschichtdestillation bei einer Temperatur von 130°C und einem Druck von 0,2 mbar abgetrennt. Das Produkt wies folgende Kenndaten und Zusammensetzung auf:

| | |
|---|---|
| NCO-Gehalt: | 22,9 % |
| monomeres HDI: | 0,08 % |
| Viskosität (23°C): | 1210 mPas |
| Farbzahl (Hazen): | 10 |

### Polyisocyanat N3)

Polyisocyanat, hergestellt in Anlehnung an Vergleichsbeispiel 2a der WO 2018/153801, durch Trimeriserung von HDI unter Verwendung einer 20 %-igen Lösung von 5-Azonia-spiro[4.5]decaniumhydrogendifluorid in 2-Ethylhexanol als Katalysator, Reaktionsstoppung bei einem NCO-Gehalt der Rohmischung von 44,8 % durch Zugabe einer zur Katalysatormenge äquivalenten Menge einer 70 %igen Lösung von Dodecylbenzolsulfonsäure in Isopropanol und anschließende Abtrennung des nicht umgesetzten HDI durch Dünnschichtdestillation bei einer Temperatur von 130°C und einem Druck von 0,2 mbar. Das Produkt wies folgende Kenndaten und Zusammensetzung auf:

| | |
|---|---|
| NCO-Gehalt: | 23,5 % |
| monomeres HDI: | 0,06 % |
| Viskosität (23°C): | 720 mPas |
| Farbzahl (Hazen): | 38 |

### Polyolkomponente 1

Mischung aus 75 mol-% Rizinusöl und 25 mol-% eines Cyclohexanon-FormaldehydKondensationsproduktes mit einer Viskosität bei 23 °C von ca. 3500 mPas und einem OH-Gehalt von 4,7 %.

### Polyolkomponente 2

Durch Propoxylierung von TMP hergestelltes Polyetherpolyol mit einem mittleren Molekulargewicht von 450, einer Viskosität bei 23 °C von ca. 600 mPas und einem OH-Gehalt von 11,7 %.

### Polyaminkomponente 1

Polyasparaginsäureester, hergestellt gemäß EP-B 0 403 921 (Polyasparaginsäureester I)) durch Umsetzung von 2 mol Maleinsäurediethylester mit 1 mol 4,4'-Diaminodicyclohexylmethan, mit einer Viskosität bei 23 °C von ca. 1000 mPas und einem Äquivalent-Gewicht von 276 g/val.

### Beispiel 1 (Herstellung des Polyisocyanatgemisches 1)

80 Gewichtsteile des Polyisocyanates M1) wurden bei 50°C mit 20 Gewichtsteilen des Polyisocyanates N1) durch Rühren homogen gemischt. Nach Abkühlen auf Raumtemperatur lag ein erfindungsgemäßes Polyisocyanatgemisch 1 mit folgenden Kenndaten vor:

| | |
|---|---|
| NCO-Gehalt: | 15,6 % |
| monomeres PDI: | 0,04 % |
| Viskosität (23°C): | 510 mPas |
| Farbzahl (Hazen): | 25 |

### Beispiel 2 (Herstellung des Polyisocyanatgemisches 2)

50 Gewichtsteile des Polyisocyanates M1) wurden bei 50°C mit 50 Gewichtsteilen des Polyisocyanates N1) durch Rühren homogen gemischt. Nach Abkühlen auf Raumtemperatur lag ein erfindungsgemäßes Polyisocyanatgemisch 2 mit folgenden Kenndaten vor:

| | |
|---|---|
| NCO-Gehalt: | 18,0 % |
| monomeres PDI: | 0,06 % |
| Viskosität (23°C): | 1300 mPas |
| Farbzahl (Hazen): | 28 |

### Beispiel 3 (Herstellung des Polyisocyanatgemisches 3)

75 Gewichtsteile des Polyisocyanates M1) wurden bei 50°C mit 25 Gewichtsteilen des Polyisocyanates N1) durch Rühren homogen gemischt. Nach Abkühlen auf Raumtemperatur lag ein erfindungsgemäßes Polyisocyanatgemisch 3 mit folgenden Kenndaten vor:

| | |
|---|---|
| NCO-Gehalt: | 16,0 % |
| monomeres PDI: | 0,05 % |
| Viskosität (23°C): | 570 mPas |
| Farbzahl (Hazen): | 22 |

### Beispiel 4 (Herstellung des Polyisocyanatgemisches 4)

75 Gewichtsteile des Polyisocyanates M1) wurden bei 50°C mit 25 Gewichtsteilen des Polyisocyanates N3) durch Rühren homogen gemischt. Nach Abkühlen auf Raumtemperatur lag ein erfindungsgemäßes Polyisocyanatgemisch 4 mit folgenden Kenndaten vor:

| | |
|---|---|
| NCO-Gehalt: | 16,5 % |
| monomeres PDI: | 0,04 % |
| Viskosität (23°C): | 400 mPas |
| Farbzahl (Hazen): | 25 |

### Beispiel 5 (erfindungsgemäße Beschichtungszusammensetzung, Verarbeitungszeit)

60,8 Gew.-Teile der Polyolkomponente 1 und 39,2 Gew.-Teile des Polyisocyanatgemisches 2 (entsprechend einem Äquivalentverhältnis von NCO:OH = 1:1) wurden mit Hilfe eines SpeedMixers DAC 150 FVZ (Firma Hauschild, DE) 1 Min bei 3500 U/Min zu einem Klarlack homogenisiert. Die Anfangsviskosität des Klarlacks bei 23 °C betrug 2310 mPas. Zur Bestimmung der Verarbeitungszeit wurde die Viskosität im Abstand von jeweils 1 Minute erneut gemessen. Nach 20 Minuten war die Grenzviskosität von 10000 mPas, oberhalb derer eine Applikation mit der Rolle nicht mehr möglich ist, überschritten.

### Beispiel 6(Vergleich, Verarbeitungszeit)

65,2 Gew.-Teile der Polyolkomponente 1 und 34,8 Gew.-Teile des Polyisocyanates 1 (entsprechend einem Äquivalentverhältnis von NCO:OH = 1:1) wurden mit Hilfe eines SpeedMixers DAC 150 FVZ (Firma Hauschild, DE) 1 Min bei 3500 U/Min zu einem Klarlack homogenisiert. Die Anfangsviskosität des Klarlacks bei 23 °C betrug 4720 mPas. Zur Bestimmung der Verarbeitungszeit wurde die Viskosität im Abstand von jeweils 1 Minute erneut gemessen. Nach 11 Minuten war die Grenzviskosität von 10000 mPas, oberhalb derer eine Applikation mit der Rolle nicht mehr möglich ist, überschritten.

*Der Vergleich der Beispiele 5 und 6 zeigt, dass die Verarbeitungszeit der erfindungsgemäßen Beschichtungszusammensetzung (Beispiel 5) bei 23°C nahezu doppelt so lang ist, wie die des Vergleichslackes aus Beispiel 6.*

### Beispiel 7 (erfindungsgemäße Beschichtungszusammensetzung und Beschichtung)

Aus 32,6 Gew.-Teilen der Polyolkomponente 1 wurde mit 38,0 Gew,-Teilen Schwerspat EWO (Fa. Deutsche Barytindustrie, Bad Lauterberg, DE), 0,01 Gew.-Teilen Dioctylzinn(IV)-neodecanoat (TIB KAT 318, TIB Chemicals AG, Mannheim, DE) als Katalysator, 0,15 Gew.-Teilen eines handelsüblichen Entschäumers TEGO AIREX 944 (Evonik Operations GmbH, Essen, DE), als Füllstoff, 3,3 Gew.-Teilen Finma-Sorb 430PR (Finma GmbH, Rosbach vor der Höhe, DE) als Trockenmittel, 0,8 Gew.-Teilen Disperbyk 2205 (BYK-Chemie GmbH, Wesel, DE) als Dispergieradditiv sowie 0,8 Gew.-Teilen Tioxide TR-81 (Huntsman Pigments Division, Billingham, GB) 0,06 Gew.-Teilen Bayferrox 920, 0,03 Gew.-Teilen Bayferrox 222 und 0,09 Gew.-Teilen Bayferrox^{®} 318 M (jeweils LANXESS Deutschland GmbH, Köln, DE) als Pigmente mit Hilfe eines Dissolvers ein lösemittelfreier Stammlack formuliert.

Anschließend fügte man 24,3 Gew.-Teile des Polyisocyanatgemisches 1 (entsprechend einem Äquivalentverhältnis von NCO:OH = 1:1) hinzu und mischte 5 Minuten im Dissolver. Das so erhaltene erfindungsgemäße lösemittelfreie Beschichtungsmittel wurde auf eine Polypropylenplatte gegossen und auf eine Schichtdicke von ca. 1 mm ausgestrichen.

Nach 24-stündiger Aushärtung bei Raumtemperatur und anschließender dreitägiger Lagerung bei 50°C wurde die Beschichtung vom Substrat abgezogen. Am freien Film wurden folgende Eigenschaften gefunden:

| | |
|---|---|
| Härte Shore A / D: | 71 / 22 |
| Zugfestigkeit: | 1,8 N/mm² |
| Weiterreißfestigkeit: | 2,4 N/mm |

### Beispiel 8 (erfindungsgemäße Beschichtungszusammensetzung und Beschichtung)

78,2 Gew.-Teile des in Beispiel 7 beschriebenen Stammlacks wurde mit 21,8 Gew.-Teilen des Polyisocyanatgemisches 2 (entsprechend einem Äquivalentverhältnis von NCO:OH = 1:1) versetzt und 5 Minuten im Dissolver gemischt. Das so erhaltene Beschichtungsmittel wurde wie in Beispiel 7 beschrieben auf eine Polypropylenplatte appliziert und ausgehärtet. Am freien Film wurden folgende Eigenschaften gefunden:

| | |
|---|---|
| Härte Shore A / D: | 72/28 |
| Zugfestigkeit: | 3,5 N/mm² |
| Weiterreißfestigkeit: | 3,4 N/mm |

### Beispiel 9 (Vergleich)

81,3 Gew.-Teile des in Beispiel 7 beschriebenen Stammlack wurde mit 18,7 Gew.-Teilen des Polyisocyanats N1) (entsprechend einem Äquivalentverhältnis von NCO:OH = 1:1) versetzt und 5 Minuten im Dissolver gemischt. Das so erhaltene Beschichtungsmittel wurde ebenfalls auf eine Polypropylenplatte appliziert und wie vorstehend beschrieben ausgehärtet. Am freien Film wurden folgende Eigenschaften gefunden:

| | |
|---|---|
| Härte Shore A / D: | 89 / 43 |
| Zugfestigkeit: | 7,2 N/mm² |
| Weiterreißfestigkeit: | 8,2 N/mm |

*Der Vergleich der Beispiele 7 bis 9 zeigt, dass die erfindungsgemäßen Beschichtungsmittel nach Beispiel 7 und 8 bei für Fußbodenbeschichtungen weiterhin akzeptablen Festigkeiten zu Filmen niedrigerer Shore-Härten A*/*D führen, was gleichbedeutend mit einem verbesserten Gehkomfort ist.*

### Beispiel 10 (erfindungsgemäße Beschichtungszusammensetzung und Beschichtung)

Aus 26,1 Gew.-Teilen der Polyolkomponente 1 und 8,7 Gew.-Teilen der Polyolkomponente 2 wurde mit 27,8 Gew,-Teilen Schwerspat EWO (Fa. Deutsche Barytindustrie, Bad Lauterberg, DE), 0,02 Gew.-Teilen Dioctylzinn(IV)-neodecanoat (TIB KAT 318, TIB Chemicals AG, Mannheim, DE) als Katalysator, 0,15 Gew.-Teilen eines handelsüblichen Entschäumers TEGO AIREX 944 (Evonik Operations GmbH, Essen, DE), als Füllstoff, 3,5 Gew.-Teilen Finma-Sorb 430PR (Finma GmbH, Rosbach vor der Höhe, DE) als Trockenmittel, 0,3 Gew.-Teilen Disperbyk 2205 (BYK-Chemie GmbH, Wesel, DE) als Dispergieradditiv sowie 2,1 Gew.-Teilen Tioxide TR-81 (Huntsman Pigments Division, Billingham, GB) 0,06 Gew.-Teilen Bayferrox 920, 0,03 Gew.-Teilen Bayferrox 222 und 0,10 Gew.-Teilen Bayferrox^{®} 318 M (jeweils LANXESS Deutschland GmbH, Köln, DE) als Pigmente mit Hilfe eines Dissolvers ein lösemittelfreier Stammlack formuliert.

Anschließend fügte man 30,9 Gew.-Teile des Polyisocyanatgemisches 2 (entsprechend einem Äquivalentverhältnis von NCO:OH = 1:1) hinzu und mischte 5 Minuten im Dissolver. Das so erhaltene erfindungsgemäße lösemittelfreie Beschichtungsmittel wurde wie in Beispiel 7 beschrieben auf eine Polypropylenplatte appliziert und ausgehärtet. Am freien Film wurden folgende Eigenschaften gefunden:

| | |
|---|---|
| Härte Shore A / D: | 80 / 34 |
| Zugfestigkeit: | 6,0 N/mm² |
| Weiterreißfestigkeit: | 6,0 N/mm |

### Beispiel 11 (Vergleich)

74,0 Gew.-Teile des in Beispiel 10 beschriebenen Stammlacks wurde mit 26,0 Gew.-Teilen des Polyisocyanats N2) (entsprechend einem Äquivalentverhältnis von NCO:OH = 1:1) versetzt und 5 Minuten im Dissolver gemischt. Das so erhaltene Beschichtungsmittelwurde wie in Beispiel 7 beschrieben auf eine Polypropylenplatte appliziert und ausgehärtet. Am freien Film wurden folgende Eigenschaften gefunden:

| | |
|---|---|
| Härte Shore A / D: | 90 / 46 |
| Zugfestigkeit: | 11,1 N/mm² |
| Weiterreißfestigkeit: | 17,2 N/mm |

*Der Vergleich von Beispiel 10 und 11 zeigt, dass das erfindungsgemäße Polyisocyanatgemisch 2 auf Basis von PDI im Vergleich zu einem HDI-Polyisocyanat ähnlicher Viskosität (Polyisocyanat N2)) zu Beschichtungen niedrigerer Shore-Härten A*/*D führt, was insbesondere bei der Verwendung als Fußbodenbeschichtung einen verbesserten Gehkomfort bedeutet.*

### Beispiel 12 (erfindungsgemäße Beschichtungszusammensetzung, Verarbeitungszeit und Beschichtung)

54,2 Gew.-Teile der Polyaminkomponente 1 und 45,8 Gew.-Teile des Polyisocyanatgemisches 2 (entsprechend einem Äquivalentverhältnis von NCO:NH = 1:1) wurden mit Hilfe eines SpeedMixers DAC 150 FVZ (Firma Hauschild, DE) 1 Min bei 3500 U/Min zu einem Klarlack homogenisiert. Die Anfangsviskosität des Klarlacks bei 23 °C betrug 2200 mPas. Zur Bestimmung der Verarbeitungszeit wurde die Viskosität im Abstand von jeweils 1 Minute erneut gemessen. Nach 22 Minuten war die Grenzviskosität von 10000 mPas, oberhalb derer eine Applikation mit der Rolle nicht mehr möglich ist, überschritten.

Der erhaltene Klarlack wurde unmittelbar nach seiner Herstellung wie in Beispiel 7 beschrieben auf eine Polypropylenplatte appliziert und ausgehärtet. Am glatt verlaufenen freien Film wurden folgende Eigenschaften gefunden:

| | |
|---|---|
| Härte Shore A / D: | 97 / 72 |
| Zugfestigkeit: | 40 N/mm² |
| Weiterreißfestigkeit: | 3,4 N/mm |

### Beispiel 13 (Vergleich, Verarbeitungszeit)

58,9 Gew.-Teile der Polyaminkomponente 1 und 41,1 Gew.-Teile des Polyisocyanates N1) (entsprechend einem Äquivalentverhältnis von NCO:NH = 1:1) wurden mit Hilfe eines SpeedMixers DAC 150 FVZ (Firma Hauschild, DE) 1 Min bei 3500 U/Min zu einem Klarlack homogenisiert. Die Anfangsviskosität des Klarlacks bei 23 °C betrug 5860 mPas. Zur Bestimmung der Verarbeitungszeit wurde die Viskosität im Abstand von jeweils 1 Minute erneut gemessen. Nach 5 Minuten war die Grenzviskosität von 10000 mPas, oberhalb derer eine Applikation mit der Rolle nicht mehr möglich ist, überschritten.

Aufgrund der sehr kurzen Verarbeitungszeit war die Herstellung eines glatt verlaufenen freien Films nicht möglich.

*Der Vergleich der Beispiele 12 und 13 zeigt, dass die Verarbeitungszeit der erfindungsgemäßen Beschichtungszusammensetzung (Beispiel 12) bei 23°C mehr als vier mal so lang ist, wie die des Vergleichslackes aus Beispiel 13.*

## Patentansprüche

1. Polyisocyanatgemisch, enthaltend mindestens ein Polyisocyanat M) der allgemeinen Formel (I) 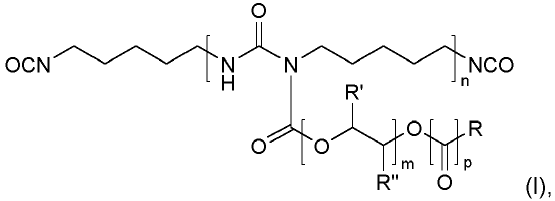 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R` und R" für Wasserstoff steht,
n für eine ganze Zahl von 1 bis 12,
m für eine ganze Zahl von 1 bis 10 und
p für 0 oder 1 steht
und mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen,
wobei die Polyisocyanate in einem Gewichtsverhältnis von M) zu N) von 40 : 60 bis 90 : 10 vorliegen.

2. Polyisocyanatgemisch gemäß Anspruch 1, **dadurch gekennzeichnet, dass** die Polyisocyanate M) und N) in einem Gewichtsverhältnis zueinander von 40 : 60 bis 85 : 15 und bevorzugt von 50 : 50 bis 80 : 20 vorliegen.

3. Polyisocyanatgemisch gemäß Anspruch 1 oder 2, **dadurch gekennzeichnet, dass** es einen NCO-Gehalt bestimmt nach DIN EN ISO 11909:2007-05 von 6,8 bis 19,6 Gew.-%, vorzugsweise 6,8 bis 19,2 Gew.-%, besonders bevorzugt 7,0 bis 18,8 Gew.-%, aufweist.

4. Polyisocyanatgemisch gemäß einem der Ansprüche 1 bis 3, **dadurch gekennzeichnet, dass** das Polyisocyanat N) aliphatisch, araliphatisch und/oder cycloaliphatisch gebundene Isocyanatgruppen aufweist, bevorzugt auf Basis von 1,5-Diisocyanatopentan, 1,6-Diisocyanatohexan, 1-Isocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan ist und besonders bevorzugt mindestens Isocyanuratstrukturen auf Basis von 1,5-Diisocyanatopentan, 1,6-Diisocyanatohexan, 1-lsocyanato-3,3,5-trimethyl-5-isocyanatomethylcyclohexan, 1,3-Bis(isocyanatomethyl)-benzol, Bis-(isocyanatomethyl)-norbornan und/oder 4,4'-Diisocyanatodicyclohexylmethan enthält und ganz besonders bevorzugt Isocyanuratstrukturen auf Basis von 1,5-Diisocyanatopentan, 1,6-Diisocyanatohexan und/oder 1-Isocyanato-3,3,5-trimethyl-5-isocyanatomethylcyclohexan enthält.

5. Polyisocyanatgemisch gemäß einem der Ansprüche 1 bis 4 mit einer nach DIN EN ISO 3219:1994-10 bei einer Scherrate von 250 s⁻¹ gemessenen Viskosität bei 23°C von von weniger als 3000 mPas, bevorzugt weniger als 2000 mPas und besonders bevorzugt weniger als 1500 mPas.

6. Verfahren zur Herstellung eines Polyisocyanatgemisches, **dadurch gekennzeichnet, dass** mindestens ein Polyisocyanat M) der allgemeinen Formel (I) 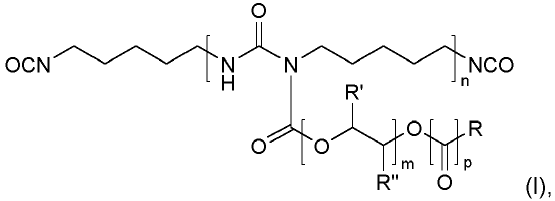 in welcher
R für einen linearen oder verzweigten, gesättigten oder ungesättigten aliphatischen und/oder gesättigten oder ungesättigten cycloaliphatischen Rest mit (6 bis 22) - p Kohlenstoffatomen, der jeweils gegebenenfalls substituiert sein kann, steht,
R' und R" unabhängig voneinander für Wasserstoff oder einen aliphatischen Rest mit 1 bis 10 Kohlenstoffatomen stehen, wobei mindestens einer der Reste R' und R" für Wasserstoff steht,
n für eine ganze Zahl von 1 bis 12,
m für eine ganze Zahl von 1 bis 10 und
p für 0 oder 1 steht
mit mindestens ein von Polyisocyanat M) verschiedenes Polyisocyanat N) mit Uretdion-, Isocyanurat-, Iminooxadiazindion-, Urethan-, Allophanat-, Biuret- und/oder Oxadiazintrionstruktur, die aliphatisch, cycloaliphatisch, araliphatisch und/oder aromatisch gebundene Isocyanatgruppen tragen, vermischt wird, so dass die Polyisocyanate M) und N) in einem Gewichtsverhältnis zueinander von 40 : 60 bis 90 : 10, bevorzugt von 40 : 60 bis 85 : 15 und besonders bevorzugt von 50 : 50 bis 80 : 20, vorliegen.

7. Verwendung des Polyisocyanatgemisches gemäß einem der Ansprüche 1 bis 5 oder des Polyisocyanatgemisches, erhältlich oder hergestellt, bevorzugt direkt hergestellt, durch das Verfahren gemäß Anspruch 6 als Ausgangskomponente bei der Herstellung von Polyurethankunststoffen, Polyharnstoffkunststoffen und/oder Polythiourethankunststoffen.

8. Zusammensetzung enthaltend entweder mindestens ein Polyisocyanatgemisch gemäß einem der Ansprüche 1 bis 5 und mindestens ein gegenüber Isocyanatgruppen reaktives Bindemittel oder enthaltend mindestens ein Polyisocyanatgemisch, erhältlich oder hergestellt gemäß einem Verfahren nach Anspruch 6, und mindestens ein gegenüber Isocyanatgruppen reaktives Bindemittel.

9. Zusammensetzung gemäß Anspruch 8, **dadurch gekennzeichnet, dass** sie das mindestens eine gegenüber Isocyanatgruppen reaktives Bindemittel in einer Komponente 1) und das mindestens eine Polyisocyanatgemisch gemäß einem der Ansprüche 1 bis 5 in einer Komponente 2) oder das mindestens eine Polyisocyanatgemisch, erhältlich oder hergestellt gemäß einem Verfahren nach Anspruch 6, in einer Komponente 2) enthält und/oder dass das mindestens eine gegenüber Isocyanatgruppen reaktive Bindemittel eine Polyhydroxylverbindung, bevorzugt ein Polyesterpolyol, Polyetherpolyol, Polycarbonatpolyol, Ricinusöl oder eine Abmischung von Ricinusöl mit Keton/Formaldehyd-Kondensaten und besonders bevorzugt ein lösemittelfreies Polyetherpoylol, Ricinusöl, Abmischungen von Ricinusöl mit Keton/Formaldehyd-Kondensaten oder beliebige Mischungen der vorgenannten, ist.

10. Zusammensetzung gemäß Anspruch 8 oder 9, **dadurch gekennzeichnet, dass** das mindestens eine gegenüber Isocyanatgruppen reaktive Bindemittel wenigstens eine Polyhydroxylverbindung mit einem Gehalt an Hydroxylgruppen von ≥ 2,0 Gew.-%, bevorzugt von ≥ 3,0 Gew.-% und besonders bevorzugt von ≥ 3,5 Gew.-% bezogen auf den Feststoffgehalt des gegenüber Isocyanatgruppen reaktiven Bindemittels umfasst.

11. Zusammensetzung gemäß Anspruch 8, **dadurch gekennzeichnet, dass** sie das mindestens eine gegenüber Isocyanatgruppen reaktives Bindemittel in einer Komponente 1) und das mindestens eine Polyisocyanatgemisch gemäß einem der Ansprüche 1 bis 5 in einer Komponente 2) oder das mindestens eine Polyisocyanatgemisch, erhältlich oder hergestellt gemäß einem Verfahren nach Anspruch 6, in einer Komponente 2) enthält und/oder dass das mindestens eine gegenüber Isocyanatgruppen reaktive Bindemittel eine Polyaminverbindung, bevorzugt ein Polyasparaginsäureester der Formel (V) 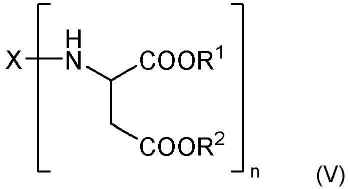 ist, in welcher
X für einen n-wertigen, gegenüber Isocyanatgruppen inerten Rest steht, wie er durch Entfernen der primären Aminogruppen aus einem organischen Amin des Molekulargewichtsbereiches 60 bis 6000 mit n primären aliphatisch und/oder cycloaliphatisch gebundenen Aminogruppen erhalten wird, der gegebenenfalls ein oder mehrere Heteroatome und/oder weitere, gegenüber Isocyanatgruppen reaktive und/oder bei Temperaturen bis 100°C inerte funktionelle Gruppen enthält,
R¹ und R² für gleiche oder verschiedene organische Reste mit 1 bis 18 Kohlenstoffatomen stehen und
n für eine ganze Zahl ≥ 1 steht.
und besonders bevorzugt ein Polyasparaginsäureester auf Basis von 1,5-Diamino-2-methylpentan, 2,4'- und/oder 4,4'-Diamino-dicyclohexylmethan und/oder 3,3'-Dimethyl-4,4'-diamino-dicyclohexylmethan und Maleinsäurediethylester ist, der einen Gehalt an Fumarsäurediester von weniger als 0,1 Gew.-% aufweist.

12. Zusammensetzung gemäß einem der Ansprüche 8 bis 11, **dadurch gekennzeichnet, dass** es eine Beschichtungszusammensetzung ist, welche optional ein oder mehrere Hilfs- und Zusatzmittel enthält.

13. Verfahren zur Herstellung einer Beschichtung auf einem Substrat, umfassend die folgenden Schritte:
a) Bereitstellen eines gegebenenfalls vorbehandelten Substrats;
b) Aufbringen mindestens einer Zusammensetzung gemäß einem der Ansprüche 8 bis 12;
c) Aushärten der Zusammensetzung gegebenenfalls unter Wärmezufuhr.

14. Verfahren zur Herstellung einer Beschichtung gemäß Anspruch 13, **dadurch gekennzeichnet, dass** es sich bei der Beschichtung um eine Fußboden- oder Balkonbeschichtungen oder eine Dachabdichtung handelt.

15. Beschichtetes Substrat, erhältlich oder hergestellt durch ein Verfahren gemäß einem der Ansprüche 13 und 14, wobei das gegebenenfalls vorbehandelte Substrat bevorzugt ein mineralischer oder metallischer Untergrund, Kunststoff oder Holz ist und bevorzugt um einen mineralischen Untergrund handelt.
